# EUROPEAN PATENT APPLICATION

(11) **EP 3 122 107 A1**
(43) Date of publication of application: **25.01.2017**
(21) Application number: 15765158.9
(22) Date of filing: 25.02.2015
(51) Int. Cl.: H04W 24/10, H04W 8/22, H04W 28/06

(54) **TERMINAL APPARATUS AND BASE STATION APPARATUS**

(30) Priority: 20.03.2014 JP 2014057386
(71) Applicant: Sharp Kabushiki Kaisha, Osaka 5908522 (JP)
(72) Inventor: YOSHIMOTO Takashi, Sakai City, Osaka 590-8522 (JP); YAMADA Ryota, Sakai City, Osaka 590-8522 (JP)
(74) Representative: Müller Hoffmann & Partner
(86) International application number: PCT/JP2015/055492
(87) International publication number: WO 2015/141419

(57) **Abstract**

There are provided a terminal apparatus, a base station apparatus, and a communication system capable of reporting efficient reception quality information when the reception quality information is transmitted in the communication system having a terminal apparatus having different reception functions. The terminal apparatus includes: a reception unit that receives information related to a network assisted interference cancellation and removal function, a channel state information request, and information related to a channel state information reporting configuration; and a transmission unit that transmits a channel state information report feedback including a predetermined number of channel state information values in accordance with the information related to the channel state information reporting configuration and the channel state information request. In a case where the information related to the network assisted interference cancellation and removal function indicates that the function is applied, a part of the predetermined number of channel state information values is an appropriate channel state information value in a case where a downlink signal is received by applying the network assisted interference cancellation and removal function.

## Description

### Technical Field

The present invention relates to a terminal apparatus and a base station apparatus.

### Background Art

In a communication system such as wideband code division multiple access (WCDMA (registered trademark)), Long-Term Evolution (LTE), LTE-Advanced (LTE-A) or worldwide interoperability for microwave access (WiMAX) by the 3rd Generation Partnership Project (3GPP), a cellular structure in which a plurality of areas covered by a base station apparatus (base station, transmission station, transmission point, downlink transmission apparatus, uplink reception apparatus, transmission antenna group, transmission antenna port group, component carrier, or eNodeB) or a transmission station corresponding to the base station apparatus is arranged in the form of cells is adopted, and thus, it is possible to expand a communication area. In the cellular structure, the same frequency can be used between adjacent cells or sectors, and thus, it is possible to improve frequency efficiency.

However, in such a cellular structure, since a terminal apparatus (mobile station apparatus, reception station, reception point, uplink transmission apparatus, downlink reception apparatus, mobile terminal, reception antenna group, reception antennal port group, or user equipment (UE)) present in a cell edge area or sector edge area receives interference by a transmission signal of a base station apparatus constituting another cell or another sector (inter-cell interference or inter-sector interference), there is a problem that frequency efficiency is lowered.

As countermeasures for the inter-cell interference or the inter-sector interference, there is advanced reception capability (advanced receiver) of the terminal apparatus. For example, in NPL 1, as the advanced receiver, a minimum mean square error-interference rejection combining (MMSE-IRC) receiver, an interference cancellation receiver, an interference suppression receiver, and a maximal likelihood detection (MLD) receiver are described. Accordingly, since the limitation due to the inter-cell interference can be relaxed, it is possible to improve frequency efficiency.

In the communication system, since efficient data transmission is realized, spatial multiplexing transmission (multi-input and multi-output (MIMO)) is applied. The advanced receiver is used to suppress inter-stream interference (inter-layer interference or inter-antenna interference) occurring in the spatial multiplexing transmission, and thus, it is possible to improve frequency efficiency.

### Citation List

### Non Patent Literature

NPL 1: "Study on Network Assisted Interference Cancellation and Suppression for LTE," 3GPP TSG RAN Meeting #59, RP-130404, March, 2013
NPL 2: 3rd Generation Partnership Project; Technical Specification Group Radio Access Network; Evolved Universal Terrestrial Radio Access (E-UTRA); Physical layer procedures (Release 11), September, 2013, 3GPP TS36.213 V11.4.0 (2013-09)
NPL 3: 3rd Generation Partnership Project; Technical Specification Group Radio Access Network; Evolved Universal Terrestrial Radio Access (E-UTRA); Radio Resource Control (RRC); Protocol specification (Release 11), September, 2013, 3GPP TS36.331 V11.5.0 (2013-09)

### Summary of Invention

### Technical Problem

In the communication system, in order to realize efficient data transmission, a modulation scheme and coding rate (modulation and coding scheme (MCS)), and the spatial multiplexing order (layer or rank) are adoptively controlled according to a channel state between the base station apparatus and the terminal apparatus. NPL 2 and NPL 3 disclose a control method thereof.

For example, In the LTE, in a case where the MCS or spatial multiplexing order of a downlink transmission signal (for example, physical downlink shared channel (PDSCH)) transmitted in a downlink are adoptively controlled, the terminal apparatus calculates reception quality information (or referred to as channel state information (CSI)) by referring to a downlink reference signal (DLRS) included in the downlink transmission signal transmitted from the base station apparatus, and reports the calculated information to the base station apparatus through a channel (for example, PUCCH) of an uplink. The base station apparatus transmits the downlink transmission signal on which the MCS selected in consideration of the reception quality information transmitted by the terminal apparatus is performed by the spatial multiplexing order. The reception quality information corresponds to a rank indicator (RI) for designating an appropriate spatial multiplexing order, a precoding matrix indicator (PMI) for designating an appropriate precoder, and a channel quality indicator (CQI) for designating an appropriate transmission rate.

In the terminal apparatus, it is preferable that the appropriate MCS is different depending on whether or not the terminal apparatus applies advanced reception. It is considered that whether or not the advanced reception is applied is selected by the properties (for example, MCS or spatial multiplexing order of a signal as interference) of interference from another cell. Thus, it is preferable that the terminal apparatus transmits both of an appropriate MCS in a case where the advanced reception is applied and an appropriate MCS in a case where the advanced reception is not applied. However, in a case where both the MCSs are transmitted, there occurs a problem that the number of resources required for reception quality information (CSI feedback or CSI report) transmitted to the base station apparatus by the terminal apparatus is increased.

The present invention has been made in view of the above-described problems, and it is an object of the invention to provide a terminal apparatus and a base station apparatus capable of reporting efficient reception quality information when the reception quality information is transmitted. Solution to Problem

In order to solve the above-described problems, the structures of the terminal apparatus and the base station apparatus according to the present invention are as follows.
(1) A terminal apparatus according to an aspect of the present invention includes: a reception unit that receives information related to a network assisted interference cancellation and removal function, a channel state information request, and information related to a channel state information reporting configuration; and a transmission unit that transmits a channel state information report feedback including a predetermined number of channel state information values in accordance with the information related to the channel state information reporting configuration and the channel state information request. In a case where the information related to the network assisted interference cancellation and removal function indicates that the function is applied, a part of the predetermined number of channel state information values is an appropriate channel state information value in a case where a downlink signal is received by applying the network assisted interference cancellation and removal function.
(2) In accordance with the terminal apparatus according to the aspect of the present invention, in the terminal apparatus, the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back, and in a case where the information related to the network assisted interference cancellation and removal function indicates that the function is applied, any one of the first channel state information value and the second channel state information value is an appropriate channel state information value in a case where the downlink signal is received without applying the network assisted interference cancellation and removal function, and the other value is an appropriate channel state information value in a case where the downlink signal is received by applying the network assisted interference cancellation and removal function.
(3) In accordance with the terminal apparatus according to the aspect of the present invention, in the terminal apparatus, the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back, in a configuration in which the second channel state information value is fed back, the channel state information report feedback includes the first channel state information values and the second channel state information values, and in a case where the information related to the network assisted interference cancellation and removal function indicates that the function is applied and the information related to the channel state information reporting configuration is a configuration in which the second channel state information value is fed back, any one of the first channel state information value and the second channel state information value is an appropriate channel state information value in a case where the downlink signal is received without applying the network assisted interference cancellation and removal function, and the other value is an appropriate channel state information value in a case where the downlink signal is received by applying the network assisted interference cancellation and removal function.
(4) In accordance with the terminal apparatus according to the aspect of the present invention, in the terminal apparatus, the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back, in a configuration in which the second channel state information value is fed back, the channel state information report feedback includes the first channel state information values and the second channel state information values, and in a case where the information related to the network assisted interference cancellation and removal function indicates that the function is applied and the information related to the channel state information reporting configuration is a configuration in which the second channel state information value is fed back, a part of the second channel state information values is an appropriate channel state information value in a case where the downlink signal is received by applying the network assisted interference cancellation and removal function.
(5) In accordance with the terminal apparatus according to the aspect of the present invention, in the terminal apparatus, the reception unit receives information related to a modulation scheme of an interference signal, and includes a signal detection unit that removes or suppresses the interference signal by using the information related to the modulation scheme of the interference signal and the channel state information value.
(6) In accordance with the terminal apparatus according to the aspect of the present invention, in the terminal apparatus, the reception unit receives information related to a layer of an interference signal, and includes a signal detection unit that separates a spatial-multiplexed signal by using the information related to the layer of the interference signal and the channel state information value.
(7) A base station apparatus according to another aspect includes: a transmission unit that transmits information related to a network assisted interference cancellation and removal function, a channel state information request, and information related to a channel state information reporting configuration; and a reception unit that receives a channel state information report feedback including a predetermined number of channel state information values in accordance with the information related to the channel state information reporting configuration and the channel state information request. In a case where the information related to the network assisted interference cancellation and removal function indicates that the function is applied, a part of the predetermined number of channel state information values is an appropriate channel state information value in a case where a downlink signal is received by applying the network assisted interference cancellation and removal function.
(8) In accordance with the base station apparatus according to the aspect of the present invention, in the base station apparatus, the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back, and in a case where the information related to the network assisted interference cancellation and removal function indicates that the function is applied, any one of the first channel state information value and the second channel state information value is an appropriate channel state information value in a case where the downlink signal is received without applying the network assisted interference cancellation and removal function, and the other value is an appropriate channel state information value in a case where the downlink signal is received by applying the network assisted interference cancellation and removal function.
(9) In accordance with the base station apparatus according to the aspect of the present invention, in the base station apparatus, the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back, in a configuration in which the second channel state information value is fed back, the channel state information report feedback includes the first channel state information values and the second channel state information values, and in a case where the information related to the network assisted interference cancellation and removal function indicates that the function is applied and the information related to the channel state information reporting configuration is a configuration in which the second channel state information value is fed back, any one of the first channel state information value and the second channel state information value is an appropriate channel state information value in a case where the downlink signal is received without applying the network assisted interference cancellation and removal function, and the other value is an appropriate channel state information value in a case where the downlink signal is received by applying the network assisted interference cancellation and removal function.
(10) The information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back, in a configuration in which the second channel state information value is fed back, the channel state information report feedback includes the first channel state information values and the second channel state information values, and in a case where the information related to the network assisted interference cancellation and removal function indicates that the function is applied and the information related to the channel state information reporting configuration is a configuration in which the second channel state information value is fed back, a part of the second channel state information values is an appropriate channel state information value in a case where the downlink signal is received by applying the network assisted interference cancellation and removal function.

### Advantageous Effects of Invention

According to the present invention, it is possible to report efficient reception quality information when the reception quality information is transmitted.

### Brief Description of Drawings

[Fig. 1] Fig. 1 is a schematic diagram showing a structure of a communication system.
[Fig. 2] Fig. 2 is a diagram showing a schematic structure of a radio frame.
[Fig. 3] Fig. 3 is a diagram showing an example of the allocation of physical channels and physical signals to a downlink subframe.
[Fig. 4] Fig. 4 is a diagram showing an example of the allocation of physical channels and physical signals to an uplink subframe.
[Fig. 5] Fig. 5 is a diagram showing an example in which a subband CSI is calculated.
[Fig. 6] Fig. 6 is a diagram showing another example in which a subband CSI is calculated.
[Fig. 7] Fig. 7 is a diagram showing a sequence in a case where channel state information is aperiodically reported.
[Fig. 8] Fig. 8 is a diagram showing a sequence in a case where the channel state information is periodically reported.
[Fig. 9] Fig. 9 is a schematic block diagram showing a structure of a base station apparatus.
[Fig. 10] Fig. 10 is a schematic block diagram showing a structure of a terminal apparatus having an advanced reception function.

### Description of Embodiments

### (First Embodiment)

Hereinafter, a first embodiment of the present invention will be described with reference to the drawings.

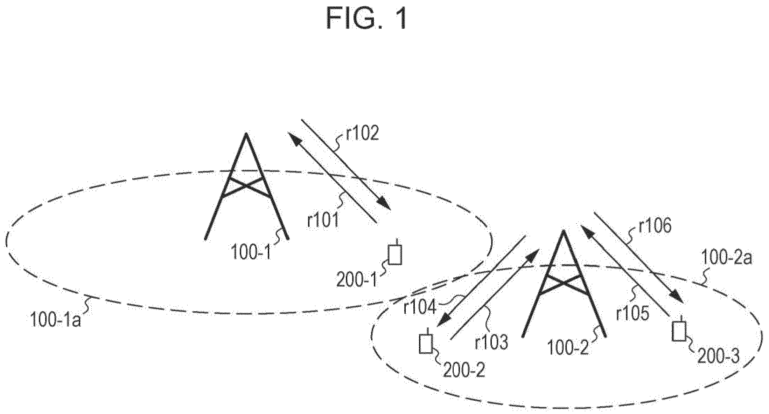

Fig. 1 is a schematic diagram showing a structure of a communication system according to the present embodiment. For example, the communication system of Fig. 1 includes base station apparatuses 100-1 and 100-2 (base station, transmission station, transmission point, downlink transmission apparatus, uplink reception apparatus, transmission antenna group, transmission antenna port group, component carrier, or eNodeB), terminal apparatuses 200-1, 200-2, and 200-3 (mobile station apparatus, reception station, reception point, uplink transmission apparatus, downlink reception apparatus, mobile terminal, reception antenna group, reception antenna port group, or user equipment (UE)). The terminal apparatus 200-1 is connected to the base station apparatus 100-1 present in a connectable range (cell, or component carrier) 100-1a. The terminal apparatuses 200-2 and 200-3 are connected to the base station apparatus 100-2 present in a connectable range (cell) 100-2a.

In the present embodiment, "X/Y" includes the meaning of "X or Y". In the present embodiment, "X/Y" includes the meaning of "X and Y". In the present embodiment, "X/Y" includes the meaning of "X and/or Y".

In Fig. 1, the base station apparatuses 100-1 and 100-2 transmit and receive uplink data (for example, uplink-shared channel (UL-SCH)), downlink data (for example, downlink-shared channel (DL-SCH)), uplink control information (for example, uplink control information (UCI)), downlink control information (for example, downlink control information (DCI), and reference signals (uplink-reference signal (UL-RS or downlink-reference signal (DL-RS)) by using uplink signals r101, r103 and r105 and downlink signals r102, r104 and r106 (the details of the signal are described below).

In Fig. 1, the terminal apparatuses 200-1 and 200-2 have an advanced reception function (advanced signal detection function, network assisted interference cancellation and suppression (NAICS), or advanced single user-multiple input multiple output detection (SU-MIMO detection)). As the advanced reception function, there are linear detection, maximum likelihood estimation, and interference canceller. As the linear detection, there are enhanced linear minimum mean square error-interference rejection combining (LMMSE-IRC), and widely linear MMSE-IRC (WLMMSE-IRC). As the maximum likelihood estimation, there are maximum likelihood (ML), reduced complexity ML (R-ML), Iterative ML, and Iterative R-ML. As the interference canceller, there are turbo successive interference cancellation (SIC), parallel interference cancellation (PIC), linear code word level SIC (L-CWIC), ML code word level SIC (ML-CWIC) and symbol level IC (SL IC). The advanced reception function of the NAICS corresponds to the linear detection, the maximum likelihood estimation, and the interference canceller. The advanced reception function of the SU-MIMO corresponds to the maximum likelihood estimation, and the interference canceller.

It is assumed that the terminal apparatus 200-3 is a terminal apparatus having no advanced reception function. For example, as compared with the terminal apparatus having the advanced reception function of the NAICS, the terminal apparatus having no advanced reception function corresponds to a terminal apparatus having the linear reception function such as the minimum mean square error-interference rejection combining (MMSE) or the LMMSE-IRC detection. For example, as compared the terminal apparatus having the advanced reception function of the SU-MIMO detection, the terminal apparatus having no advanced reception function corresponds to a terminal apparatus having the MMSE detection function. The terminal apparatuses 200-1 and 200-2 may also have the linear reception function such as the minimum mean square error-interference rejection combining (MMSE) detection.

In Fig. 1, the downlink signal r104 is inter-cell interference for the terminal apparatus 200-1. The downlink signal r102 is inter-cell interference for the terminal apparatus 200-2. The terminal apparatuses 200-1 and 200-2 remove or suppress the inter-cell interference by using the advanced reception function.

In Fig. 1, the base station apparatuses 100-1 and 100-2 may perform spatial multiplexing transmission of the downlink signals r102, r104 and r106. In this case, each terminal apparatus receives inter-stream interference (inter-layer interference or inter-antenna interference). The terminal apparatuses 200-1 and 200-2 remove or suppress the inter-stream interference by using the advanced reception function.

In Fig. 1, the base station apparatuses 100-1 and 100-2 transmit the downlink signals r101, r103 and r105 according to a configuration of a predetermined radio frame. The terminal apparatuses 200-1 and 200-2 transmit the uplink signals r102, r104 and r106 according to the configuration of the predetermined radio frame.

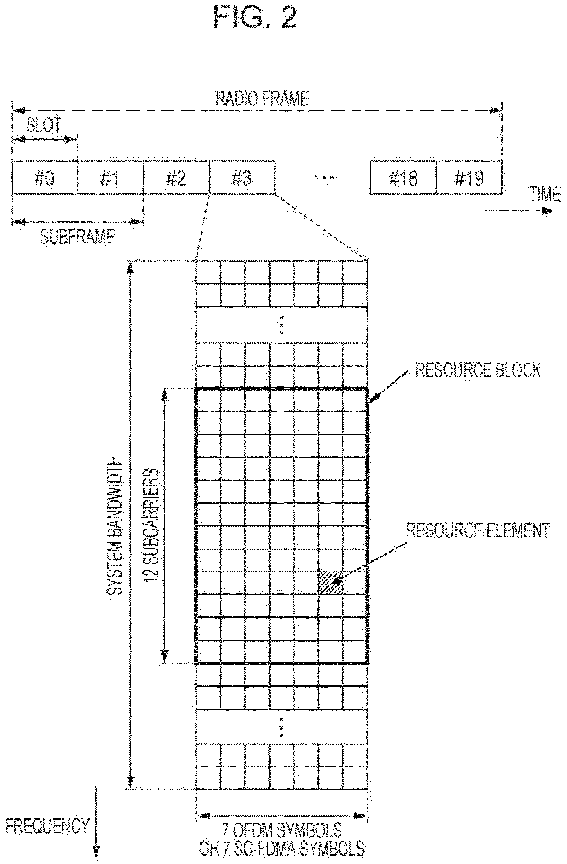

Fig. 2 is a diagram showing a schematic structure of a radio frame according to the present embodiment. In Fig. 2, a horizontal axis represents a time axis. For example, in frequency-division duplexing (FDD), the base station apparatuses 100-1 and 100-2 and the terminal apparatuses 200-1, 200-2 and 200-3 transmit the signals r101 to r106 according to the radio frame of Fig. 2. For example, the length of each radio frame has Tf = 307200 · Ts = 10 ms. Tf is referred to as radio frame duration. Ts is referred to as a basic time unit.

The radio frame includes two half frames, and the length of each half frame is 153600 · Ts = 5 ms. Each half frame includes 5 subframes, and the length of each subframe is 30720 · Ts = 1 ms.

Each subframe is defined by two successive slots, and the length of each slot is Tslot = 15360 · Ts = 0.5 ms. An i-th subframe which the radio frame includes a (2 x i)-th slot and a (2 x i + 1)-th slot. That is, 10 subframes may be used for every interval of 10 ms. Here, the subframe is also referred to as a transmission time interval (TTI). Fig. 2 shows an example in which the frequency-division multiplexing is applied, but time-division duplexing (TDD) may also be applied.

A physical signal or a physical channel transmitted in each slot is denoted by a resource grid. In a downlink, the resource grid is defined by a plurality of subcarriers and a plurality of OFDM symbols. In an uplink, the resource grid is defined by a plurality of subcarriers and a plurality of SC-FDMA symbols.

The number of subcarriers constituting one slot depends on a system bandwidth (bandwidth of cell). For example, the number of OFDM symbols or SC-FDMA symbols constituting one slot is 7. Each of elements within the resource grid is referred to as a resource element. The resource element is identified using a subcarrier number and an OFDM symbol or SC-FDMA symbol number.

The resource block is used to express the mapping of a certain physical channel (PDSCH or PUSCH) to a resource element. A virtual resource block and a physical resource block are defined for the resource block. A certain physical channel is initially mapped to a virtual resource block. Thereafter, the virtual resource block is mapped to the physical resource block.

For example, one physical resource block is defined by 7 successive OFDM symbols or SC-FDMA symbols in time domain and 12 successive subcarriers in frequency domain. One physical resource block includes (7 x 12) resource elements. One physical resource block corresponds to one slot in the time domain, and corresponds to 180 kHz in the frequency domain. The physical resource blocks are assigned numbers from 0 in the frequency domain.

In Fig. 1, downlink physical channels are used in wireless communication from the base station apparatuses 100-1 and 100-2 to the terminal apparatuses 200-1, 200-2 and 200-3 using the downlink signals r101, r103 and r105. The downlink physical channels may be used to transmit information output from a higher layer. The downlink physical channel includes a physical broadcast channel (PBCH), a physical control format indicator channel (PCFICH), a physical hybrid automatic repeat request indicator channel (PHICH), a physical downlink control channel (PDCCH), an enhanced physical downlink control channel (EPDCCH), a physical downlink shared channel (PDSCH), and a physical multicast channel (PMCH).

The PBCH is used to broadcast a master information block (MIB or broadcast channel (BCH)) used in common to the terminal apparatuses connected to the base station apparatus in each cell. The MIB is system information. For example, the MIB includes basic information such as information (system frame number (SFN)) indicating a radio frame number, a system bandwidth and the number of transmission antennas.

The PCFICH is used to transmit information indicating a region (OFDM symbol) used in the transmission of the PDCCH.

The PHICH is used to transmit a HARQ indicator (HARQ feedback or response information) indicating acknowledgement (ACK) or negative acknowledgement (NACK) of uplink data received by the base station apparatuses 100-1 and 100-2.

The PDCCH and the EPDCCH are used to transmit downlink control information (DCI). A plurality of DCI formats is defined for the transmission of the downlink control information. A field of the downlink control information is defined by the DCI format, and is mapped to an information bit. The downlink control information may be referred to as the DCI format.

The base station apparatus reports explicitly or implicitly information related to the application of the advanced reception function. For example, the DCI format may include a field for transmitting (signal) information related to the application of the advanced reception function by the terminal apparatus. As for the DCI format, the terminal apparatus may report the information related to the advanced reception function by using a specific DCI format among the plurality of DCI formats.

For example, as the DCI format for the downlink, a plurality of DCI formats such as DCI format 1A, DCI format 1B, DCI format 1D, DCI format 1, DCI format 2A, DCI format 2B, DCI format 2C, and DCI format 2D is defined. The plurality of DCI format is defined by the type (field) of control information required as the DCI for the downlink and information amount (the number of bits) of required control information.

For example, the DCI format for the downlink includes information related to the scheduling of the PDSCH. The DCI format for the downlink is also referred to as a downlink grant (or downlink assignment). For example, the DCI format for the downlink includes downlink control information such as information related to resource block assignment, information related to a modulation and coding scheme (MCS), information related to information related to the spatial multiplexing order (layer or rank), information related to a TPC command for the PUCCH, and downlink assignment index (DAI).

For example, in a case where the terminal apparatus receives the information related to the application of the advanced reception function in the downlink control information (DCI) for the downlink, the terminal apparatus performs signal detection of the PDSCH scheduled by the DCI by using the advanced reception function.

As another example, in a case where the information of the downlink control information, which is related to the application of the advanced reception is received, the terminal apparatus signal detection of the scheduled PDSCH by using the advanced reception function until the information related to the application of the advanced reception is received by the subsequent DCI format. Information related to whether or not the terminal apparatus applies the advanced reception may indicate whether or not to the advanced reception function is applied by using "0" or "1". Whether or not the advanced reception function is applied may be indicated by the presence or absence of the information of the downlink control information, which is related to the application of the advanced reception.

The downlink control information may include information related to an interference signal. The information related to an interference signal is, for example, information related to the modulation scheme or the modulation and coding scheme (MCS), information related to the spatial multiplexing order (layer or rank), and information indicating a precoding matrix.

The DCI format includes a DCI format for the uplink. For example, DCI format 0 used to schedule one PUSCH (transmit one uplink transport block) of one cell is defined.

For example, the DCI format for the uplink includes information related to the scheduling of the PUSCH. For example, the DCI format for the uplink includes downlink control information such as information related to the resource assignment, information related to the MCS, and information related to the TPC command for the PUSCH. Here, the DCI format for the uplink is also referred to as an uplink grant (or uplink assignment).

The DCI format for the uplink may be used to perform (CSI request) a request for channel state information (CSI) (referred to as reception quality information) of the downlink. The channel state information corresponds to a rank indicator (RI) which designates the appropriate spatial multiplexing order, a precoding matrix indicator (PMI) which designates an appropriate precoder, and a channel quality indicator (CQI) which designates an appropriate transmission rate (the details are described below).

The DCI format for the uplink may be used for a configuration indicating an uplink resource to which channel state information report (CSI feedback report) fed back to the base station apparatus by the terminal apparatus is mapped. For example, the channel state information report may be used for a configuration indicating an uplink resource in which periodic channel state information (periodic CSI) is reported. The channel state information report may be used for a mode configuration (CSI report mode) for reporting the periodic channel state information.

For example, the channel state information report may be used for a configuration indicating an uplink resource in which aperiodic channel state information (aperiodic CSI) is reported. The channel state information report may be used for a mode configuration (CSI report mode) for reporting the aperiodic channel state information. The base station apparatuses 100-1 and 100-2 may configure any one of the periodic channel state information report or the aperiodic channel state information report. The base station apparatuses 100-1 and 100-2 may configure both the periodic channel state information report and the aperiodic channel state information report.

The DCI format for the uplink may be used for a configuration indicating the type of the channel state information report fed back to the base station apparatus by the terminal apparatus. As the type of the channel state information report, there are wideband CSI (for example, wideband CQI) and subband CSI (for example, subband CQI).

The DCI format for the uplink may be used for a mode configuration including the periodic channel state information report or the aperiodic channel state information report and the type of the channel state information report. For example, there are a mode in which the aperiodic channel state information report and the wideband CSI are reported, a mode in which the aperiodic channel state information report and the subband CSI are reported, a mode in which the aperiodic channel state information report, the wideband CSI and subband CSI, and the periodic channel state information report and the subband CSI are reported, and a mode in which the periodic channel state information report and the wideband CSI and the subband CSI are reported.

In a case where the resource of the PDSCH is scheduled using the downlink assignment, the terminal apparatuses 200-1, 200-2 and 200-3 receive the downlink data by the scheduled PDSCH. In a case where the resource of the PUSCH is scheduled using the uplink grant, the terminal apparatuses 200-1, 200-2 and 200-3 transmit the uplink data and/or the uplink control information by the scheduled PUSCH.

The terminal apparatuses 200-1, 200-2 and 200-3 monitor a set of PDCCH candidates and/or EPDCCH candidates. In the following description, the PDCCH may indicate the PDCCH and/or the EPDDCH. The PDCCH candidates may indicate candidates of the PDCCH which are likely to be mapped and transmitted by the base station apparatuses 100-1 and 100-2. The monitoring may include that the terminal apparatuses 200-1, 200-2 and 200-3 try to decode the PDCCHs within the set of PDCCH candidates according to all the DCI formats to be monitored.

The set of PDCCH candidates monitored by the terminal apparatuses 200-1, 200-2 and 200-3 is also referred to as a search space. The search space includes a common search space (CSS) and a UE-specific search space (USS). The CSS is a region in which the plurality of terminal apparatuses connected to the base station apparatus commonly monitors the PDCCH and/or the EPDCCH in a certain cell including the base station apparatus. The terminal apparatuses 200-1, 200-2 and 200-3 monitor the PDCCH and detects the PDCCH addressed to the terminal apparatus in the CSS and/or the USS.

RNTI assigned to the terminal apparatuses 200-1, 200-2 and 200-3 by the base station apparatuses 100-1 and 100-2 is used in the transmission of the downlink control information (transmission in the PDCCH). Specifically, a cyclic redundancy check (CRC) parity bit is added to the downlink control information, and the CRC parity bit is scheduled by the RNTI after the parity bit is added. Here, the CRC parity bit added to the downlink control information may be acquired from the payload of the downlink control information.

The terminal apparatuses 200-1, 200-2 and 200-3 try to decode the downlink control information to which the CRC parity bit scheduled by the RNTI is added, and detects the downlink control information in which CRC succeeds as the downlink control information addressed to the terminal apparatus (also referred to as blind decoding). That is, the terminal apparatuses 200-1, 200-2 and 200-3 detect the PDCCH accompanying by the CRC scheduled by the RNTI. The terminal apparatus 1 detects the PDCCH accompanying by the DCI format to which the CRC parity bit scheduled by the RNTI is added.

The PDSCH is used to transmit the downlink data. Hereinafter, the transmission of the downlink data in the PDSCH is also described as the transmission in the PDSCH. The reception in the downlink data in the PDSCH is also described as the reception in the PDSCH.

The PDSCH is used to transmit a system information block type 1 message. The system information block type 1 message is cell-specific information. The system information block type 1 message is an RRC message (common RRC message or UE common RRC message).

The PDSCH is used to transmit a system information message. The system information message may include system information block X other than the system information block type 1. The system information message is cell specific information. The system information message is an RRC message.

The PDSCH is used to transmit the RRC message. The RRC message transmitted from the base station apparatuses 100-1 and 100-2 may be common to the plurality of terminal apparatus within the cell. The RRC message transmitted from the base station apparatus 100-1 may be a dedicated message (also referred to as dedicated signaling) to the terminal apparatus 200-1. Similarly, the RRC message transmitted from the base station apparatus 100-2 may be a dedicated message to the terminal apparatus 200-2. That is, UE-specific information is transmitted using the dedicated message to a certain terminal apparatus. The PDSCH is used to transmit MAC CE. Here, the RRC message and/or the MAC CE are also referred to as higher layer signaling.

The PDSCH may be used by the terminal apparatus to report the information related to the application of the advanced reception function. For example, the RRC message may include information related to whether or not the terminal apparatus applies the advanced reception.

For example, in a case where the information related to the application of the advanced reception function is received by the PDSCH, the terminal apparatus performs signal detection of the scheduled PDSCH by using the advanced reception function until the information related to the application of the advanced reception by the subsequent PDSCH is received. The information related to the application of the advanced reception function may indicate whether or not the terminal apparatus applies the advanced reception function by using "0" or "1". Whether or not the advanced reception function may be indicated by whether or not the information related to whether or not the terminal apparatus applies the advanced reception is present in the PDSCH.

The PDSCH may be used to request the channel state information of the downlink. The channel state information corresponds to a rank index (RI) which designates the appropriate spatial multiplexing order, a precoding matrix index (PMI) which designates an appropriate precoding matrix, and a channel quality index (CQI) which designates an appropriate transmission rate.

The PDSCH may be used to transmit an uplink resource to which channel state information report (CSI feedback report) fed back to the base station apparatus by the terminal apparatus is mapped. For example, the channel state information report may be used to transmit an uplink resource that reports periodic channel state information (periodic CSI). The channel state information report may be used to transmit a mode configuration (CSI report mode) for reporting the periodic channel state information.

For example, the channel state information report may be used for a configuration indicating an uplink resource in which aperiodic channel state information (aperiodic CSI) is reported. The channel state information report may be used for a mode configuration (CSI report mode) which reports the aperiodic channel state information. The base station apparatuses 100-1 and 100-2 may configure any one of the periodic channel state information report or the aperiodic channel state information report. The base station apparatuses 100-1 and 100-2 may configure both the periodic channel state information report and the aperiodic channel state information report.

The PDSCH may be used to transmit the type of the channel state information report fed back to the base station apparatus by the terminal apparatus. As the type of the channel state information report, there are wideband CSI (for example, wideband CQI) and subband CSI (for example, subband

### CQI).

The PDSCH may transmit a mode configuration including the periodic channel state information report or the aperiodic channel state information reporting configuration and a type configuration of the channel state information report. For example, there are a mode in which the periodic channel state information report and the wideband CSI are reported, and a mode in which the periodic channel state information report and the subband CSI are reported.

The PDSCH may transmit information related to an interference signal. The information related to the interference signal may include information related to a modulation and coding scheme (MCS), information related to the spatial multiplexing order, and information indicating a precoding matrix.

The PMCH is used to transmit a multicast channel (MCH).

Downlink physical signals are used in wireless communication from the base station apparatuses 100-1 and 100-2 to the terminal apparatuses 200-1, 200-2 and 200-3 using the downlink signals r101, r103 and r105. The downlink physical signals are not used to transmit information output from the higher layer but are used by a physical layer. The downlink physical signal includes a synchronization signal (SS) and a downlink-reference signal (DL-RS).

The synchronization signal is used by the terminal apparatuses 200-1, 200-2 and 200-3 to synchronize the frequency domain and time domain of the downlink.

A downlink reference signal is used by the terminal apparatuses 200-1, 200-2 and 200-3 to perform channel compensation of the downlink physical channel. The downlink reference signal may be used by the terminal apparatuses 200-1, 200-2 and 200-3 to calculate the channel state information of the downlink. For example, as the type of the downlink reference signal, there are a cell-specific reference signal (CRS), a UE-specific reference signal (URS) related to the PDSCH, a demodulation reference signal (DMRS) related to the EPDCCH, a non-zero power channel state information-reference signal (NZP CSI-RS), a zero power channel state information-reference signal (ZP CSI-RS), a multimedia broadcast and multicast service over single frequency network reference signal (MBSFN RS), and a positioning reference signal (PRS).

The CRS is transmitted in all bands of a subframe. The CRS is used to demodulate the PBCH, the PDCCH, the PHICH, the PCFICH and the PDSCH. The CRS may be used by the terminal apparatuses 200-1, 200-2 and 200-3 to calculate the channel state information of the downlink. The PBCH, the PDCCH, the PHICH and the PCFICH are transmitted through an antenna port used to transmit the CRS.

The URS associated with the PDSCH is transmitted in a subframe and a band used to transmit the PDSCH with which the URS is associated. The URS is used to demodulate the PDSCH with which the URS is associated.

The PDSCH is transmitted through an antenna port used to transmit the CRS or the URS. The DCI format 1A is used to schedule the PDSCH transmitted through an antenna port used to transmit the CRS. For example, the CRS is transmitted through one or several of antenna ports i (i = 0, 1, 2 and 3).

The DMRS associated with the EPDCCH is transmitted in a subframe and a band used to transmit the EPDCCH with which the DMRS is associated. The DMRS is used to demodulate the EPDCCH with which the DMRS is associated. The EPDCCH is transmitted through an antenna port used to transmit the DMRS.

The NZP CSI-RS is transmitted in a configured subframe. The base station apparatus configures a resource in which the NZP CSI-RS is transmitted. The NZP CSI-RS is used by the terminal apparatus 1 to calculate the channel state information of the downlink. The terminal apparatus 1 performs signal measurement (channel measurement) by using the NZP CSI-RS.

The base station apparatus configures a resource of the ZP CSI-RS. The base station apparatus 3 transmits the ZP CSI-RS at zero power. That is, the base station apparatus does not transmit the ZP CSI-RS. The base station apparatus does not transmit the PDSCH and the EPDCCH in the configured resource of the ZP CSI-RS. For example, the terminal apparatus may measure interference in the resource corresponding to the NZP CSI-RS in a certain cell.

The MBSFN RS is transmitted in all bands of a subframe used to transmit the PMCH. The MBSFN RS is used to demodulate the PMCH. The PMCH is transmitted through an antenna port used to transmit the MBSFN RS.

The PRS is used by the terminal apparatus to measure a geographic position of the terminal apparatus.

Uplink physical channels are used in wireless communication from the terminal apparatuses 200-1, 200-2 and 200-3 to the base station apparatuses 100-1 and 100-2 using the uplink signals r101, r103 and r105. The uplink physical channel may be used to transmit information output from a higher layer. The uplink physical channel includes a physical uplink control channel (PUCCH), a physical uplink shared channel (PUSCH), and a physical random access channel (PRACH).

The PUCCH is used to transmit uplink control information (UCI). The uplink control information includes channel state information (CSI) of the downlink, and a scheduling request (SR) indicating a request for a PUSCH resource. The channel state information corresponds to a rank index (RI) which designates the appropriate spatial multiplexing order, precoding matrix information (PMI) which designates an appropriate precoder, and a channel quality index (CQI) which designates an appropriate transmission rate.

The channel quality index (CQI) (hereinafter, referred to as a CQI value) may be an appropriate modulation scheme (for example, QPSK, 16-QAM, 64-QAM, or 256-QAM) or a coding rate in a predetermined band (the details are described below). The CQI value may be an index (CQI index) determined by the modulation scheme or the coding rate. The CQI value may be previously determined by the system.

The rank index or the precoding quality index may be previously determined by the system. The rank index or the precoding matrix index may be an index determined by the spatial multiplexing order or the precoding matrix information. The values of the rank index, the precoding matrix index or
the channel quality index (CQI) are generally referred to as a CSI value.

The uplink control information includes acknowledgement (ACK)/negative-acknowledgement (NACK) of the downlink data (downlink transport block or downlink-shared channel (DL-SCH)). Here, the ACK/NACK is also referred to as HARQ-ACK, HARQ feedback or response information. The PUCCH may be used by the terminal apparatus to transmit the information related to the advanced reception function. The PUCCH may be used to transmit information (UE capability) indicating that the terminal apparatus includes the advanced reception function.

The PUSCH is used to transmit the uplink data (uplink transport block or uplink-shared channel (UL-SCH)). That is, the transmission of the uplink data in the UL-SCH is performed via the PUSCH. That is, the UL-SCH which is the transport channel is mapped to the PUSCH which is the physical channel. The PUSCH may be used to transmit the uplink data together with the HARQ-ACK and/or the channel state information. The PUSCH may be used to transmit only the channel state information or only the HARQ-ACK and the channel state information.

The PUSCH is used to transmit the RRC message. The RRC message is information/signal processed in a radio resource control (RRC) layer. The RRC message may be used by the terminal apparatus to transmit the information related to the advanced reception function. The RRC message may be used to transmit the information indicating that the terminal apparatus has the advanced reception function. The PUSCH is used to transmit the MAC control element (CE). Here, the MAC CE is information/signal processed (transmitted) in a medium access control (MAC) layer. The MAC CE may be used by the terminal apparatus to transmit the information related to the advanced reception function. The MAC CE may be used to transmit the information that the terminal apparatus has the advanced reception function.

The PRACH is used to transmit a random access preamble. The PRACH is used to indicate an initial connection establishment procedure, a handover procedure, a connection re-establishment procedure, synchronization (timing adjustment) for the uplink transmission, and a request of the PUSCH resource.

Uplink physical signals are used in wireless communication from the terminal apparatuses 200-1, 200-2 and 200-3 to the base station apparatuses 100-1 and 100-2 using the uplink signals r101, r103 and r105. The uplink physical signals are not used to transmit information output from the higher layer but are used by the physical layer. The uplink physical signal includes an uplink reference signal (UL RS). The uplink reference signal includes a demodulation reference signal (DMRS) and a sounding reference signal (SRS).

The DMRS is associated with the transmission of the PUSCH or the PUCCH. The DMRS is time-multiplexed with the PUSCH or the PUCCH. For example, the base station apparatuses 100-1 and 100-2 use the DMRS in order to perform channel compensation of the PUSCH or the PUCCH.

The SRS is not associated with the transmission of the PUSCH or the PUCCH. The base station apparatuses 100-1 and 100-2 use the SRS in order to measure the channel state of the uplink. The terminal apparatuses 200-1, 200-2 and 200-3 transmit a first SRS in a first resource configured by the higher layer. In a case where information indicating a request for the transmission of the SRS via the PDCCH is received, the terminal apparatuses 200-1, 200-2 and 200-3 transmit a second SRS in a second resource configured by the higher layer only once. Here, the first SRS is also referred to as a periodic SRS or a type 0 triggered SRS. The second SRS is also referred to as an aperiodic SRS or a type 1 triggered SRS.

The downlink physical channel and the downlink physical signal are generally referred to as the downlink signal. The uplink physical channel and the uplink physical signal are generally referred to as the uplink signal. The downlink physical channel and the uplink physical channel are generally referred to as the physical channel. The downlink physical signal and the uplink physical signal are generally referred to as the physical signal.

The BCH, the MCH, the UL-SCH and the DL-SCH are transport channels. A channel used in the medium access control (MAC) layer is referred to as a transport channel. A unit of the transport channel used in the MAC layer is also referred to as a transport block (TB) or a MAC protocol data unit (PDU). In the MAC layer, a hybrid automatic repeat request (HARQ) is controlled for each transport block. The transport block is a unit of data delivered to the physical layer from the MAC layer. In the physical layer, the transport block is mapped to a code word, and a coding process is performed on each code word.

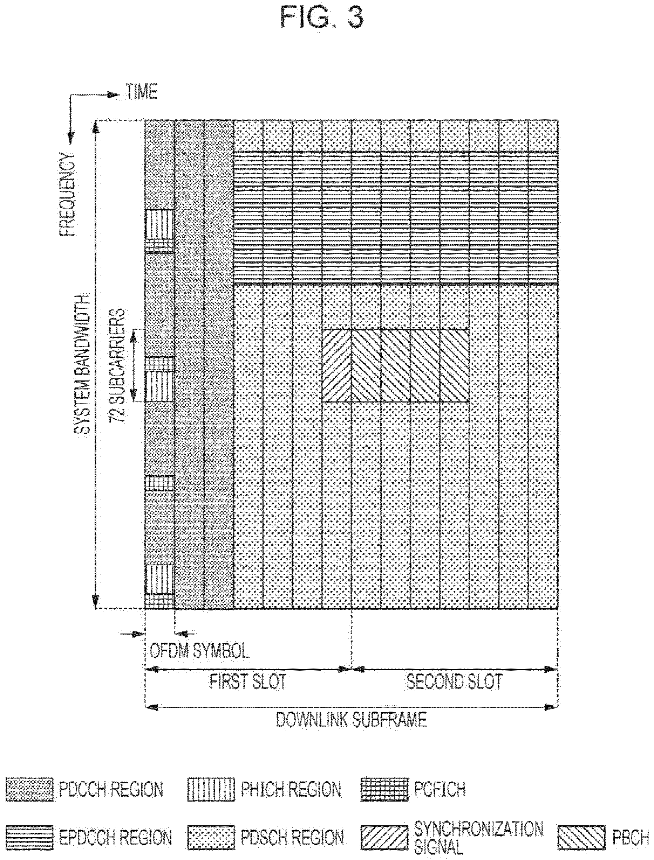

Fig. 3 is a diagram showing an example of the allocation of the physical channels and the physical signals to the downlink subframe according to the present invention. In Fig. 3, a horizontal axis represents a time axis, and a vertical axis represents a frequency axis. The base station apparatuses 100-1 and 100-2 may transmit the downlink physical channels (PBCH, PCFICH, PHICH, PDCCH, EPDCCH, and PDSCH) and the downlink physical signals (synchronization signal and downlink reference signal) in the downlink subframe. Here, in order to simplify the description, the downlink reference signals are not shown in Fig. 3.

In PDCCH regions, a plurality of PDCCHs may be frequency-, and time-multiplexed. In EPDCCH regions, a plurality of EPDCCHs may be frequency-, time-, and spatial-multiplexed. In PDSCH regions, a plurality of PDSCHs may be frequency-, and spatial-multiplexed. The PDCCH and the PDSCH or the EPDCCH may be time-multiplexed. The PDSCH and the EPDCCH may be frequency-multiplexed.

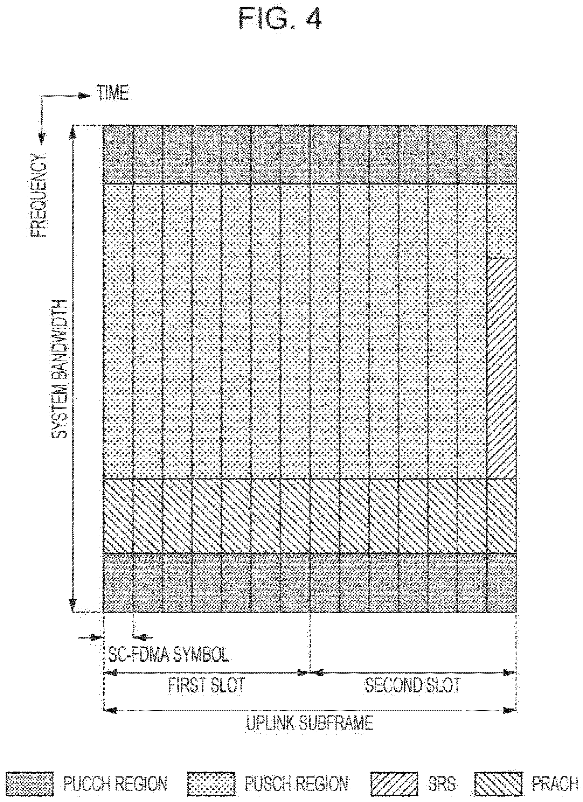

Fig. 4 is a diagram showing an example of the allocation of the physical channels and the physical signals to the uplink subframe according to the present embodiment. In Fig. 4, a horizontal axis represents a time axis, and a vertical axis represents a frequency axis. The terminal apparatuses 200-1, 200-2 and 200-3 may transmit the uplink physical channels (PUCCH, PUSCH, and PRACH) and the uplink physical signals (DMRS and SRS) in the uplink subframe.

In PUCCH regions, a plurality of PUCCHs may be frequency-, time-, and code-multiplexed. In PUSCH regions, a plurality of PUSCHs may be frequency-, and spatial-multiplexed. The PUCCH and the PUSCH may be frequency-multiplexed. The PRACH may be allocated to a single subframe or over two subframes. A plurality of PRACHs may be code-multiplexed.

The SRS may be transmitted using the last SC-FDMA symbol within the uplink subframe. The terminal apparatuses 200-1, 200-2 and 200-3 may transmit the PUSCH and/or the PUCCH by using the SC-FDMA symbols except for the last SC-FDMA symbols within the uplink subframe and may transmit the SRS by using the last SC-FDMA symbol within the uplink subframe in a single uplink subframe of a single cell.

That is, the terminal apparatuses 200-1, 200-2 and 200-3 may transmit both the SRS and the PUSCH or/and the PUCCH in a single uplink subframe of a single cell. The DMRS may be time-multiplexed with the PUCCH or the PUSCH. In order to simplify the description, the DMRS is not shown in Fig. 4.

Hereinafter, the type of the channel state information report of the downlink will be described. As the type of the channel state information report of the downlink, there are a wideband CSI (for example, wideband CSI) and a subband CSI (for example, subband CSI). As for the wideband CSI, one channel state information item is calculated for a system bandwidth of a cell. For example, one channel state information item for a system bandwidth of Fig. 3 is calculated.

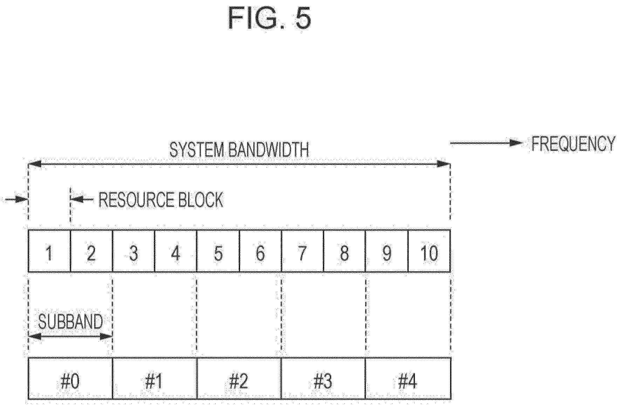

As for the subband CSI, the system bandwidth is divided according to a predetermined unit, and one channel state information item is calculated for the divided system bandwidths. Fig. 5 is a diagram showing an example in which the subband CSI according to the present embodiment is calculated. In the communication system according to the present embodiment, the system bandwidth includes a plurality of resource blocks. As described in Fig. 2, the resource block is a block including a plurality of resource elements. In Fig. 5, an example in which the system bandwidth includes 10 resource blocks is shown.

The system bandwidth is divided into groups (subbands in Fig. 5. Hereinafter, referred to as the subbands) including a plurality of resource blocks. The number of subbands may be calculated based on a configuration of the subband size (the number of resource blocks constituting the subband). The subband size may be configured based on the system bandwidth. Fig. 5 shows an example in a case where the subband size is 2. All the subbands may not have the same subband size, or may have different bandsizes.

The subband size may be previously configured by the system. The subband including the plurality of resource blocks may be assigned an index. In Fig. 5, an example in which subbands assigned to a low frequency are assigned indices in ascending order is shown.

In a case where the subband CSI of Fig. 5 is calculated, a CSI value is calculated for every subband including the plurality of resource blocks. For example, as the CSI value, a CSI value capable of being received by the terminal apparatus with predetermined reception quality may be used. As the predetermined reception quality, a predetermined error rate may be used.

The subband size (the number of resource blocks) may be differently configured depending on whether or not the advanced reception function is applied. For example, the size of the subband in a case where the advanced reception function is applied in the same system bandwidth may be less than the size in a case where the advanced reception function is applied. That is, the number of subbands in a case where the advanced reception function is applied in the same system bandwidth may be greater than the number of subbands in a case where the advanced reception function is applied.

In Fig. 5, the terminal apparatus may report one CSI value for all the subbands constituting the system bandwidth to the base station apparatus. The terminal apparatus may select a predetermined number of appropriate subbands from the subbands constituting the system bandwidth, and may report one CSI for the selected subbands to the base station apparatus. The number of selected subbands may be configured based on the system bandwidth. The number of appropriate subbands to be reported may be previously configured by the system.

A predetermined number of appropriate subbands may be selected from the subbands constituting the system bandwidth, and in a case where a mode in which the CSI value for the selected subband is reported to the base station apparatus is configured, the indices of the selected subbands may be reported. The index of the subband together with the CSI value may be reported. In Fig. 5, the base station apparatus may transmit a report mode configuration of the subband CSI to the terminal apparatus. For example, the report mode configuration may be transmitted using the PDCCH and the PDSCH.

In Fig. 5, the CSI values of both the subband CSI and the wideband CSI may be reported. In this case, the CSI value of the subband CSI may be denoted by a difference from the CSI value of the wideband CSI.

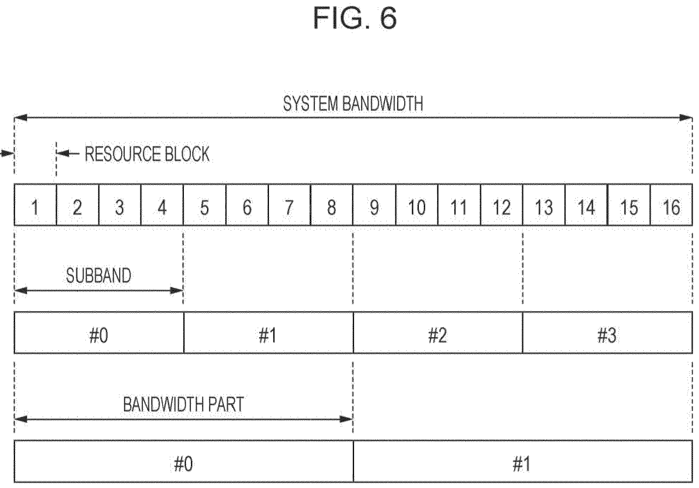

Fig. 6 is a diagram showing another example in which the subband CSI according to the present embodiment is calculated. In the communication system according to the present embodiment, the system bandwidth includes a plurality of resource blocks. In Fig. 6, an example in which the system bandwidth includes 16 resource blocks is shown.

The system bandwidth is divided into groups (subbands in Fig. 6. Hereinafter, referred to as the subbands) including the plurality of resource blocks. The number of subbands may be calculated based on the configuration of the subband size (the number of resource blocks constituting the subband). The subband size may be configured based on the system bandwidth. The subband including the plurality of resource blocks may be assigned an index. In Fig. 5, an example in which subbands assigned to a low frequency are assigned indices in ascending order is shown.

The system bandwidth is divided into groups (bandwidth parts in Fig. 6. Hereinafter, referred to as the bandwidth parts) including the plurality of subbands. The number of bandwidth parts may be configured based on the system bandwidth. The bandwidth part may be assigned an index. In Fig. 6, an example in which bandwidth parts assigned to a low frequency are assigned indices in ascending order is shown.

The subband size and the number of band parts may be previously configured by the system. Fig. 6 shows an example in a case where the subband size is 4 and the number of bandwidth parts is 2.

In a case where the subband CSI of Fig. 6 is calculated, a CSI value is calculated for every subband including the plurality of resource blocks. For example, as the CSI value, a CSI value capable of being received by the terminal apparatus with predetermined reception quality may be used. As the predetermined reception quality, a predetermined error rate may be used.

The subband size (the number of resource blocks) may be differently configured depending on whether or not the advanced reception function is applied. For example, the subband size in a case where the advanced reception function is applied in the same system bandwidth may be less than the size in a case where the advanced reception function is applied. That is, the number of subbands in a case where the advanced reception function is applied in the same system bandwidth may be greater than the number of subbands in a case where the advanced reception function is applied. The number of band parts may be differently configured depending on whether or not the advanced reception function is applied. For example, the number of band parts in a case where the advanced reception function is applied in the same system bandwidth may be greater than the number of band parts in a case where the advanced reception function is applied. Accordingly, since the CSI value may be minutely configured for the channel state, it is possible to improve transmission efficiency due to an interference suppression effect of the advanced reception function.

In Fig. 6, the terminal apparatus may select a predetermined number of appropriate subbands from the plurality of subbands constituting the bandwidth part in each bandwidth part, and may report one CSI value for the selected subband to the base station apparatus. The predetermined number of the appropriate subbands may be previously configured by the system. For example, in a case where the predetermined number of the appropriate subbands is 1, in a bandwidth part index #0 of Fig. 6, a subband index having an appropriate CSI value among a subband index #0 and a subband index #1 is selected, and this CSI value is reported to the base station apparatus.

In each bandwidth part, a predetermined number of appropriated subbands may be selected from the plurality of subbands constituting the bandwidth part, and in a case where a mode in which one CSI value for the selected subband is reported to the base station apparatus is configured, the index of the selected subband may be reported. The index of the subband together with the CSI value may be transmitted. In Fig. 6, the base station apparatus may transmit the report mode configuration of the subband CSI to the terminal apparatus. For example, the report mode configuration may be transmitted using the PDCCH and the PDSCH.

In Fig. 6, the terminal apparatus may sequentially report the CSI value of each bandwidth part or/and the subband index to the base station apparatus. In Fig. 6, the CSI values of both the subband CSI and the wideband CSI may be reported. In this case, the CSI value of the subband CSI may be denoted by a different from the CSI value of the wideband CSI.

In the reception state information report according to the present embodiment, since the advanced reception function is not configured, the terminal apparatus reports the CSI value in a case where the advanced reception function is not applied together with the subband CSI and the wideband CSI to the base station apparatus.

In the reception state information report according to the present embodiment, in a case where the advanced reception function is configured, the terminal apparatus reports an appropriate CSI value, as the subband CSI, in a case where the advanced reception function is applied to the base station apparatus, and reports an appropriate CSI value, as the wideband CSI, in a case where the advanced reception function is not applied to the base station apparatus.

For example, in a case where the advanced reception function is configured and the report mode of the wideband CSI is configured, the terminal apparatus reports an appropriate CSI value, as the wideband CSI, in a case where the signal is received without applying the advanced reception function to the base station apparatus. In a case where the advanced reception function is configured and the report mode of the subband CSI is configured, the terminal apparatus reports an appropriate CSI value, as the subband CSI, in a case where the signal is received without applying the advanced reception function to the base station apparatus.

For example, in a case where the advanced reception function is configured and the report mode of the subband CSI is configured, at least one of a predetermined number of CSI values to be reported to the base station apparatus may be used as the appropriate CSI value in a case where the advanced reception function is applied, and the remaining values may be used as the appropriate CSI value in a case where the signal is received without applying the advanced reception function.

In a case where the advanced reception function is configured, the terminal apparatus may report an appropriate CSI value, as the wideband CSI, in a case where the advanced reception function is applied to the base station apparatus, and may report an appropriate CSI value, as the subband CSI, in a case where the advanced reception function is not applied to the base station apparatus.

In a case where the advanced reception function is configured, the terminal apparatus may report an appropriate CSI value, as the wideband CSI and the subband CSI to the base station apparatus, in a case where the advanced reception function is not applied.

Accordingly, in the communication system, even in a case where the advanced reception function is applied, it is possible to report the reception quality information without increasing the feedback amount of reception quality information report.

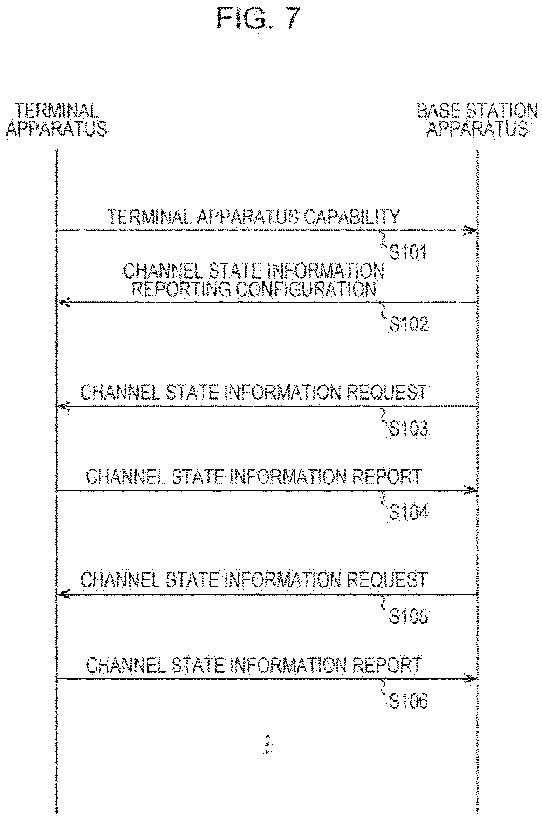

Fig. 7 is a diagram showing a sequence in a case where the channel state information is aperiodically reported. The terminal apparatus of Fig. 7 reports the capability (UE capability) of the terminal apparatus to the connected base station apparatus (S101). The terminal apparatus transmits information indicating that the terminal apparatus has the advanced reception function to the base station apparatus by using information of the capability. The base station apparatus transmits the reference signal (CRS) of the downlink. The resource assignment of the reference signal is shown in Fig. 3. The terminal apparatus estimates the channel state by using the reference signal (not shown).

In Fig. 7, the base station apparatus transmits a channel state information reporting configuration to the terminal apparatus (S102). For example, the base station apparatus transmits the channel state information reporting configuration, as the RRC message. The base station apparatus transmits a mode configuration in which the wideband CSI report is fed back and a mode configuration in which the subband CSI repot is fed back to the terminal apparatus through the transmission of the channel state information reporting configuration. The base station apparatus may transmit the mode configuration (the mode configuration in which the CSI values for all the subbands are transmitted or the mode configuration in which the CSIs for the predetermined number of appropriate subbands are transmitted) in the subband CSI report.

The base station apparatus transmits the mode configuration of the aperiodic channel state information report or/and the mode configuration of the periodic channel state information report to the terminal apparatus through the transmission of the channel state information reporting configuration. Hereinafter, the mode configuration of the aperiodic channel state information report will be described.

The base station apparatus transmits the channel state information request (CSI request) to the terminal apparatus (S103). For example, the channel state information request (CSI request) may be transmitted through the PDCCH. The channel state information request (CSI request) may include the mode configuration of the wideband CSI or the mode configuration of the subband CSI. The terminal apparatus feeds the channel state report back to the base station apparatus by a predetermined subframe after the channel state information request is received (S104). For example, the terminal apparatus feeds the channel state report back according to the resource assignment of the PUSCH included in the transmitted PDCCH. The terminal apparatus may feed the channel state information report back according to the resource assignment determined using the reception timing of the PDCCH as a reference point. The terminal apparatus feeds the CSI value according to the channel state information reporting configuration back, as the channel state information report.

In Fig. 7, the terminal apparatus reports the channel state information to the base station apparatus whenever there is a request for the downlink channel state information from the base station apparatus (S105 and S106).

In a case where the channel state information reporting configuration is a wideband CSI report configuration, the terminal apparatus reports an appropriate CSI value in a case where the downlink signal is received without applying the advanced reception function to the base station apparatus, as the channel state information report (S104).

In a case where the channel state information reporting configuration is a subband CSI report configuration, the terminal apparatus reports an appropriate CSI value in a case where the downlink signal is received by applying the advanced reception function to the base station apparatus as the channel state information report (S104). Although it has been described that the wideband CSI is used as the appropriate CSI in a case where the downlink signal is received without applying the advanced reception function and the subband CSI is used as the appropriate CSI value in a case where the downlink signal is received by applying the advanced reception function, another case may be applied. Among the wideband CSI and the predetermined number of CSIs, if at least one of the appropriate CSI in a case where the downlink signal is received without applying the advanced reception function and the appropriate CSI in a case where the downlink signal is received by applying the advanced reception function is included, this case may be included in the present embodiment.

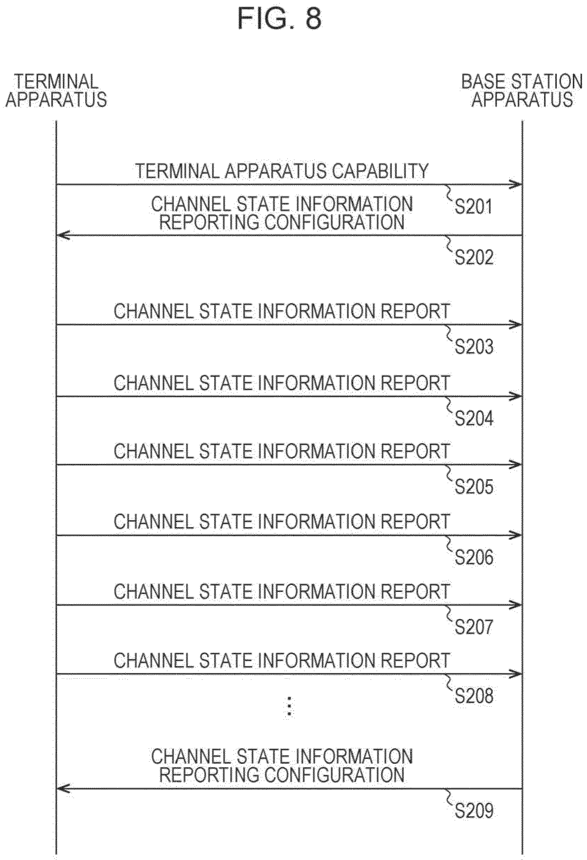

Fig. 8 is a diagram showing a sequence in a case where the channel state information is periodically reported. The terminal apparatus of Fig. 8 reports the capability (UE capability) of the terminal apparatus to the connected base station apparatus (S201). The base station apparatus transmits the reference signal (CRS) of the downlink. The terminal apparatus estimates the channel state by using the reference signal (not shown).

In Fig. 8, the base station apparatus transmits the channel state information reporting configuration to the terminal apparatus (S202). For example, the base station apparatus transmits the channel state information reporting configuration, as the RRC message. The base station apparatus may transmit the mode configuration in which the wideband CSI information is fed back and the mode configuration in which the subband CSI report is fed back to the terminal apparatus through the transmission of the channel state information reporting configuration. The base station apparatus may transmit the mode configuration (the mode configuration in which the CSI values for all the subbands are transmitted or the mode configuration in which the CSIs for a predetermined number of appropriate subbands are transmitted) in the subband CSI report.

The base station apparatus transmits the mode configuration of the aperiodic channel state information report or/and the mode configuration of the periodic channel state information report to the terminal apparatus through the transmission of the channel state information reporting configuration. Hereinafter, the mode configuration of the periodic channel state information report will be described.

IN a case where information indicating the mode configuration of the periodic channel state information report is received, the terminal apparatus periodically transmits the channel state information report to the base station apparatus (S203 to 208). For example, an interval at which the channel state information is reported may be transmitted by the channel state information reporting configuration. The terminal apparatus may feed the channel state report back by using the resource of the PUCCH. An interval at which the channel state information is reported may be previously configured by the system.

In Fig. 8, the terminal apparatus reports the channel state information to the base station apparatus until the release of the mode configuration of the periodic channel state information report is received from the base station apparatus (S209).

In a case where the channel state information reporting configuration is the wideband CSI report configuration, the terminal apparatus reports an appropriate CSI value in a case where the downlink signal is received without applying the advanced reception function to the base station apparatus, as the channel state information report (S203 to 208).

In a case where the channel state information reporting configuration is the subband CSI report configuration, the terminal apparatus reports an appropriate CSI value in a case where the downlink signal is received by applying the advanced reception function to the base station apparatus, as the channel state information report (S203 to 208). Accordingly, in a case where the advanced reception function is applied, it is possible to remove or suppress the interference for different interference states by carriers and resource blocks constituting the system band. Although it has been described that the wideband CSI is used as the appropriate CSI value in a case where the downlink signal is received without applying the advanced reception function and the subband CSI is used as the appropriate CSI value in a case where the downlink signal is received by applying the advanced reception function, another case may be applied. Among the wideband CSI and the predetermined number of CSIs, if at least one of the appropriate CSI in a case where the downlink signal is received without applying the advanced reception function and the appropriate CSI in a case where the downlink signal is received by applying the advanced reception function is included, this case is included in the present invention. Accordingly, it is possible to report the reception quality information without greatly increasing the feedback amount of the reception quality information report. Therefore, it is possible to remove or suppress the interference while suppressing the increase of the feedback amount.

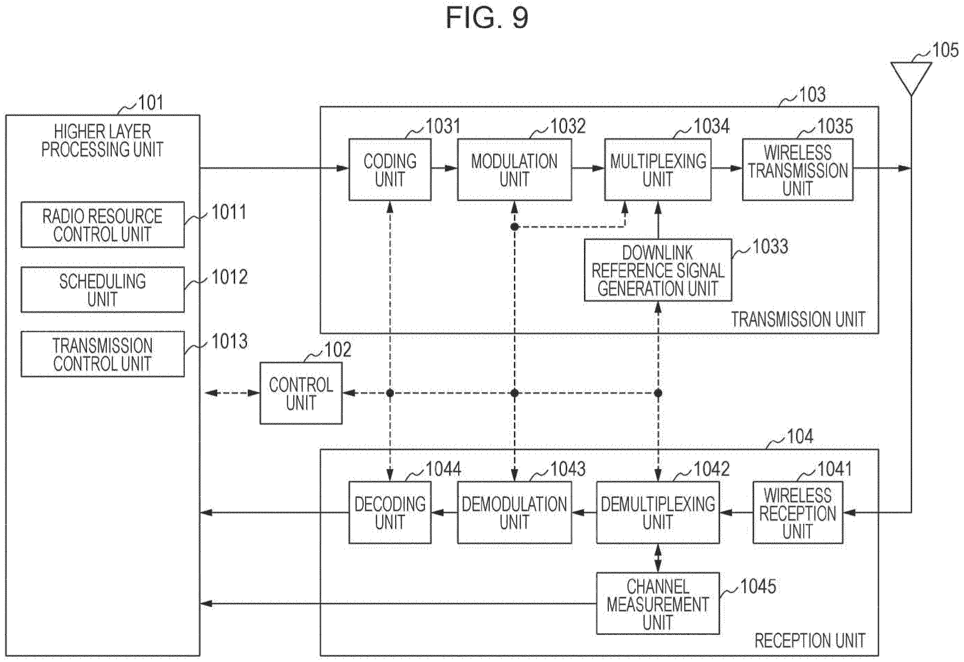

Fig. 9 is a schematic block diagram showing a structure of the base station apparatus according to the present embodiment. The base station apparatuses 100-1 and 100-2 according to the present embodiment are base station apparatuses capable of controlling the terminal apparatus having the advanced reception function. Hereinafter, the base station apparatus 100-1 will be representatively described. As shown in Fig. 9, the base station apparatus 100-1 includes a higher layer processing unit 101, a control unit 102, a transmission unit 103, a reception unit 104, and a transmit and receive antenna 105.

The higher layer processing unit 101 includes a radio resource control unit 1011, a scheduling unit 1012 and a transmission control unit 1013. The transmission unit 103 includes a coding unit 1031, a modulation unit 1032, a downlink reference signal generation unit 1033, a multiplexing unit 1034, and a wireless transmission unit 1035. The reception unit 104 includes a wireless reception unit 1041, a demultiplexing unit 1042, a demodulation unit 1043, a decoding unit 1044, and a channel measurement unit 1045.

The higher layer processing unit 101 performs processes of a medium access control (MAC) layer, a packet data convergence protocol (PDCP) layer, a radio link control (RLC) layer, a radio resource control (RRC) layer. The higher layer processing unit 101 generates information required for controlling the transmission unit 103 and the reception unit 104, and outputs the generated information to the control unit 102.

The radio resource control unit 1011 generates the downlink data (transport block), the system information, the RRC message and the MAC CE which are allocated to the PDSCH of the downlink, or acquires these information items from the higher node. The radio resource control unit 1011 outputs these information items to the transmission unit 103, and outputs another information item to the control unit 102.

The radio resource control unit 1011 manages various configuration information items/parameters of each terminal apparatus (terminal apparatus 100-1 in Fig. 1) connected to the base station apparatus. The radio resource control unit 1011 may set various configuration information items/parameters to the terminal apparatus through the signal of the higher layer. That is, the radio resource control unit 1011 transmits/broadcasts information indicating the various configuration information items/parameters.

The various configuration information items/parameters of the radio resource control unit 1011 may include the configuration information of the terminal apparatus as the interference. The base station apparatus may acquire the configuration information of the terminal apparatus as the interference from the configuration information of the terminal apparatus connected to the base station apparatus.

The radio resource control unit 1011 may acquire information indicating that the terminal apparatus has the advanced reception function from the reception unit 104. The information indicating that the terminal apparatus has the advanced reception function may be included in the UE capability. The radio resource control unit 1011 may add the information indicating that the terminal apparatus has the advanced reception function in a method of removing or suppressing the interference signal. The radio resource control unit 1011 may acquire the information related to the channel state information report from the reception unit 104.

The radio resource control unit 1011 may generate the information related to the application of the advanced reception function, and may output the generated information to the transmission unit 103. The radio resource control unit 1011 may generate the channel state information reporting configuration, and may output the generated configuration to the transmission unit 103. The radio resource control unit 1011 may generate the channel state information request, and may output the generated request to the transmission unit 103. The radio resource control unit 1011 may generate information (for example, the system information of the interference signal to be suppressed, RNTI, MCS, RI, or PMI) required to remove or suppress the interference signal (for example, the transmission signal of the base station apparatus 100-2 received by the terminal apparatus 200-1 or the stream signal in the SU-MIMO), and may output the generated information to the transmission unit 103. The information required to remove/suppress the interference signal may be acquired from another base station apparatus (for example, X2 interface or Internet line).

The scheduling unit 1012 determines a frequency and a subframe to which the physical channel (PDSCH or PUSCH) is assigned, a coding rate and a modulation scheme (or MCS) of the physical channel and a transmission power from the received channel state information (CSI) and the quality of the channel or the estimation value of the channel input from the channel measurement unit 1045. The scheduling unit 1012 generates the control information (for example, DCI format) for controlling the reception unit 104 and the transmission unit 103. The scheduling unit 1012 outputs the generated information to the control unit 102. The scheduling unit 1012 determines timings when the transmission process and the reception process are performed.

The transmission control unit 1013 controls the transmission unit 103 to map the PDSCH to the resource element based on the RNTI used in the scrambling of the CRC parity bit added to the DCI format and perform the transmission in the PDSCH. Here, the transmission unit 103 may have the function of the transmission control unit 1013.

The control unit 102 generates control signals for controlling the transmission unit 103 and the reception unit 104 based on the information input from the higher layer processing unit 101. The control unit 102 generates the downlink control information based on the information input from the higher layer processing unit 101, and outputs the generated information to the transmission unit 103.

The control unit 102 may acquire the information indicating that the terminal apparatus has the advanced reception function from the reception unit 104. The radio resource control unit 1011 may acquire the information related to the channel state information report from the reception unit 104. The control unit 102 may input the acquired information to the higher layer processing unit 101.

The control unit 102 may add the information related to the application of the advanced reception function to the downlink control information. The control unit 102 may add the channel state information reporting configuration to the downlink control information. The control unit 102 may add the channel state information request to the downlink control information. The control unit 102 may generate the information

(for example, the system information of the interference signal to be suppressed, RNTI, MCS, RI, or PMI) required to remove or suppress the interference signal in addition to the downlink control information, and may output the generated information to the transmission unit 103. The information required to remove or suppress the interference signal may be acquired from another base station apparatus (for example, X2 interface or Internet line).

In response to the control signal input from the control unit 102, the transmission unit 103 generates the downlink reference signal, codes and modulates the HARQ indicator, the downlink control information and the downlink data input from the higher layer processing unit 101, multiplexes the PHICH, the PDCCH, the EPDCCH, the PDSCH and the downlink reference signal, and transmits the signals to the terminal apparatus 200-1 through the transmit and receive antenna 105.

The coding unit 1031 performs coding on the HARQ indicator, the downlink control information and the downlink data input from the higher layer processing unit 101 by using a predetermined coding scheme such as coding block coding, convolutional coding or turbo coding. The coding unit 1031 performs the coding by using the coding scheme determined by the radio resource control unit 1011. The modulation unit 1032 modulates a coding bit input from the coding unit 1031 by using a predetermined modulation scheme such as binary phase shift keying (BPSK), quadrature phase shift keying (QPSK), 16-quadrature amplitude modulation (QAM), 64-QAM, or 256-QAM or a modulation scheme determined by the radio resource control unit 1011.

The downlink reference signal generation unit 1033 generates a sequence known to the terminal apparatus 2 as the downlink reference signal which is acquired by a predetermined rule based on a physical cell identity (PCI) for identifying the base station apparatus 100-1.

The multiplexing unit 1034 multiplexes the modulation symbol of each modulated channel, the generated downlink reference signal and the downlink control information. That is, the multiplexing unit 1034 allocates the modulation symbol of each modulated channel, the generated downlink reference signal and the downlink control information to the resource elements.

The wireless transmission unit 1035 performs inverse fast Fourier transform (IFFT) on the multiplexed modulation symbol to generate an OFDM symbol, adds cyclic prefix (CP) to the OFDM symbol to generate a baseband digital signal, and converts the baseband digital signal into an analog signal. The wireless transmission unit removes an extra frequency component from the signal through filtering, and converts a frequency of the signal into a carrier frequency through up-converting. The wireless transmission unit amplifies a power of the signal, and outputs and transmits the amplified signal to the transmit and receive antenna 105.

In response to the control signal input from the control unit 102, the reception unit 104 separates, demodulates and decodes a reception signal received from the terminal apparatus 200-1 through the transmit and receive antenna 105, and outputs the decoded information to the higher layer processing unit 101.

The wireless reception unit 1041 converts an uplink signal received through the transmit and receive antenna 105 into a baseband signal through down-converting, removes an unnecessary frequency component from the signal, and controls an amplification level such that a signal level is appropriately maintained. The wireless reception unit performs quadrature demodulation on the signal based on an in-phase component and a quadrature component of the received signal, and converts the quadrature-demodulated analog signal into a digital signal.

The wireless reception unit 1041 removes a portion corresponding to the CP from the converted digital signal. The wireless reception unit 1041 performs fast Fourier transform (FFT) on the signal acquired by removing the CP, and extracts the signal in the frequency domain to output the extracted signal to the demultiplexing unit 1042.

The demultiplexing unit 1042 separates the signal input from the wireless reception unit 1041 into signals such as the PUCCH, the PUSCH and the uplink reference signal. Such separating is previously determined by the radio resource control unit 1011 of the base station apparatus 100-1, and is performed based on the assignment information of the radio resource included in the uplink grant transmitted to the terminal apparatus 200-1. The demultiplexing unit 1042 compensates the channels of the PUCCH and the PUSCH from the estimation value of the channel input from the channel measurement unit 1045. The demultiplexing unit 1042 outputs the separated uplink reference signal to the channel measurement unit 1045.

The demodulation unit 1043 performs inverse discrete Fourier transform (IDFT) on the PUSCH to acquire a modulation symbol, and demodulates a reception signal for each modulation symbol of the PUCCH and the PUSCH by using a predetermined modulation scheme such as BPSK, QPSK, 16-QAM, 64-QAM or 256-QAM or a modulation scheme previously transmitted to each terminal apparatus 2 from the base station apparatus by the uplink grant.

The decoding unit 1044 decodes coding bits of the demodulated PUCCH and PUSCH by using a predetermined coding scheme at a predetermined coding rate or a coding rate transmitted to the terminal apparatus 2 from the base station apparatus by the uplink grant, and outputs the decoded uplink data and uplink control information to the higher layer processing unit 101. In a case where the PUSCH is retransmitted, the decoding unit 1044 performs decoding by using a coding bit retained in a HARQ buffer input from the higher layer processing unit 101 and the demodulated coding bit.

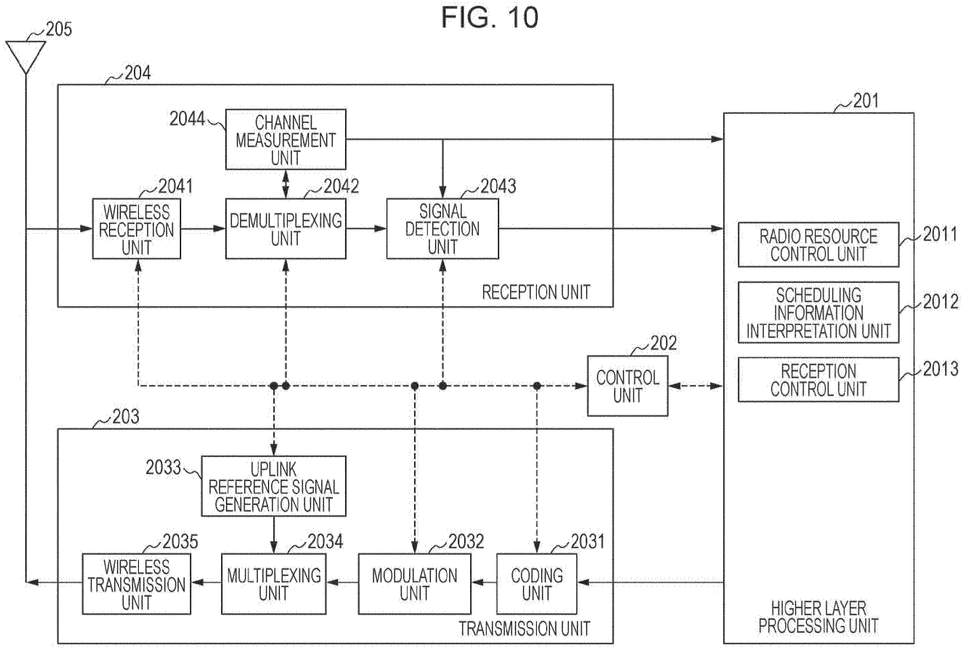

Fig. 10 is a schematic block diagram showing a structure of the terminal apparatus having the advanced reception function according to the present embodiment. The base station apparatuses 200-1 and 200-2 according to the present embodiment are terminal apparatuses having the advanced reception function. Hereinafter, the terminal apparatus 200-1 will be representatively described.

As shown in Fig. 9, the terminal apparatus 200-1 includes a higher layer processing unit 201, a control unit 202, a transmission unit 203, a reception unit 204, and a transmit and receive antenna 205. The higher layer processing unit 201 includes a radio resource control unit 2011, a scheduling information interpretation unit 2012, and a reception control unit 2013.

The transmission unit 203 includes a coding unit 2031, a modulation unit 2032, an uplink reference signal generation unit 2033, a multiplexing unit 2034, and a wireless transmission unit 2035. The reception unit 204 includes a wireless reception unit 2041, a demultiplexing unit 2042, a signal detection unit 2043, and a channel measurement unit 2044.

The higher layer processing unit 201 outputs the uplink data (transport block) generated by an operation of a user to the transmission unit 203. The higher layer processing unit 201 performs processes of a medium access control (MAC) layer, a packet data convergence protocol (PDCP) layer, a radio link control (RLC) layer and a radio resource control (RRC) layer.

The radio resource control unit 2011 manages various configuration information items/parameters of the terminal apparatus. The radio resource control unit 2011 sets various configuration information items/parameters based on the signals (for example, RRC signaling and MAC CE) of the higher layer received from the base station apparatus 100-1. The radio resource control unit 2011 generates information allocated to each channel of the uplink, and outputs the generated information to the transmission unit 203.

The radio resource control unit 2011 may acquire the information related to the application of the advanced reception function from the reception unit 204. The radio resource control unit 2011 may acquire the channel state information reporting configuration from the reception unit 204. The radio resource control unit 2011 may acquire the channel state information request from the reception unit 204. The radio resource control unit 2011 may acquire the information (for example, the system information of the interference signal to be suppressed, RNTI, MCS, RI, or PMI) required to remove or suppress the interference signal.

The radio resource control unit 2011 may generate the information indicating that the terminal apparatus has the advanced reception function, and may output the generated information to the transmission unit 203. The radio resource control unit 1011 may add a method of removing or suppressing the interference signal to the information indicating that the terminal apparatus has the advanced reception function. In response to the information related to the application of the advanced reception function/channel state information reporting configuration/channel state information request, the radio resource control unit 2011 may generates the channel state information report, and may output the generated report to the transmission unit 203. The radio resource control unit 2011 may input the acquired information to the reception unit 204.

The scheduling information interpretation unit 2012 interprets the downlink control information (DCI format or scheduling information) received through the reception unit 204. Based on the result of interpreting the DCI format, the scheduling information interpretation unit 2012 generates the control information in order to control the reception unit 204 and the transmission unit 203, and outputs the generated information to the control unit 202.

The reception control unit 2013 identifies the subframe based on the RNTI used in the scrambling of the CRC parity bit added to the DCI format, and controls the reception unit 204 such that the PDSCH is decoded based on the identified subframe. Here, the reception unit 204 may have the function of the reception control unit 2013.

The control unit 202 generates the control signals for controlling the reception unit 204 and the transmission unit 203 based on the information input from the higher layer processing unit 201. The control unit 202 outputs the generated control signals to the reception unit 204 and the transmission unit 203, and controls the reception unit 204 and the transmission unit 203.

The control unit 202 may acquire the information related to the application of the advanced reception function from the reception unit 204. The control unit 202 may acquire the channel state information reporting configuration from the reception unit 204. The radio resource control unit 2011 may acquire the channel state information request from the reception unit 204. The control unit 202 may acquire the information (for example, the system information of the interference signal to be suppressed, RNTI, MCSI, RI or PMI) required to remove or suppress the interference signal from the reception unit 204. The control unit 102 may input the acquired information to the higher layer processing unit 201 and the reception unit 204.

The control unit 202 may generate the information indicating that the terminal apparatus has the advanced reception function, and may output the generated information to the transmission unit 203. The radio resource control unit 1011 may include a method of removing or suppressing the interference signal to the information indicating that the terminal apparatus has the advanced reception function. In response to the information related to the application of the advanced reception function/channel state information reporting configuration/channel state information request, the radio resource control unit 2011 may generate the channel state information report, and may output the generated report to the transmission unit 203.

The control unit 202 may control the reception unit 204 to demodulate the interference signal based on the information related to the application of the advanced reception function/channel state information reporting configuration/information required to remove or suppress the interference signal. The control unit 202 may control the reception unit 204 to decode the interference signal based on the information related to the application of the advanced reception function/information required to remove or suppress the interference signal.

In response to the control signal input from the control unit 202, the reception unit 204 separates, demodulates and decodes a reception signal received from the base station apparatus 100-1 through the reception antenna 205, and outputs the decoded information to the higher layer processing unit 201.

The wireless reception unit 2041 converts a downlink signal received through the transmit and receive antenna 205 into a baseband signal through down-converting, removes an unnecessary frequency component from the signal, controls an amplification level such that a signal level is appropriately maintained, performs quadrature demodulation based on an in-phase component and a quadrature component of the received signal, and converts the quadrature-demodulated analog signal into a digital signal. The wireless reception unit 2041 removes a portion corresponding to the CP from the converted digital signal, performs fast Fourier transform on the signal acquired by removing the CP, and extracts the signal in the frequency domain.

The demultiplexing unit 2042 separates the extracted signal into the PHICH, the PDCCH, the EPDCCH, the PDSCH, and the downlink reference signal. The demultiplexing unit 2042 compensates the channels of the PHICH, PDCCH and EPDCCH based on the estimation value of the channel input from the channel measurement unit 2044, detects the downlink control information, and outputs the detected information to the control unit 202. The control unit 202 outputs the channel estimation values of the PDSCH and a desired signal to the signal detection unit 2043. The demultiplexing unit 2042 outputs the separated downlink reference signal to the channel measurement unit 2044.

The channel measurement unit 2044 performs channel estimation of the interference signal. In the channel estimation of the interference signal, the downlink reference signal may be used. The channel measurement unit 2044 detects the channel estimation value of the interference signal to the signal detection unit 2043.

The signal detection unit 2043 detects the downlink data (transport block) of the terminal apparatus connected to the base station apparatus based on the PDSCH, the channel estimation value, the information related to the application of the advanced reception function/information required to remove or suppress the interference signal, and outputs the detected downlink data to the higher layer processing unit 201.

In a case where information indicating that the advanced reception function is applied is acquired, the signal detection unit 2043 removes or suppresses the interference signal by using the advanced reception function. As the method of the removing or suppressing the interference signal, there are the linear detection, the maximum likelihood estimation, and the interference canceller. As the linear detection, there are linear minimum mean square error-interference rejection combining (LMMSE-IRC), enhanced LMMSE-IRC, and WLMMSE-IRC (widely linear MMSE-IRC). As the maximum likelihood estimation, there are maximum likelihood (ML), reduced complexity ML (R-ML), Iterative ML, and Iterative R-ML. As the interference canceller, there are turbo successive interference cancellation (SIC), parallel interference cancellation (PIC), linear code word level SIC (L-CWIC), ML code word level SIC (ML-CWIC), and symbol level IC (SLIC).

In response to the control signal input from the control unit 202, the transmission unit 203 generates the uplink reference signal, codes and modulates the uplink data (transport block) input from the higher layer processing unit 201, multiplexes the PUCCH, the PUSCH and the generated uplink reference signal, and transmits the multiplexed signal to the base station apparatus 100-1 through the transmit and receive antenna 205.

The coding unit 2031 performs coding such as convolutional coding or block coding the uplink control information input from the higher layer processing unit 201. The coding unit 2031 performs turbo coding based on the information used to schedule the PUSCH.

The modulation unit 2032 modulates the coding bits input from the coding unit 2031 by a modulation scheme such as BPSK, QPSK, 16-QAM or 64-QAM transmitted by the downlink control information or a modulation scheme previously determined for each channel.

The uplink reference signal generation unit 2033 generates a sequence acquired by a predetermined rule (expression) based on the physical cell identity (referred to as PCI or cell ID) for identifying the base station apparatus 100-1, the bandwidth to which the uplink reference signal is allocated, the cyclic shift transmitted by the uplink grant, and the value of the parameter for generating the DMRS sequence.

In response to the control signal input from the control unit 202, the multiplexing unit 2034 rearranges the modulation symbols of the PUSCHs in parallel, and then performs discrete Fourier transform (DFT) on the rearranged modulation symbols. The multiplexing unit 2034 multiplexes the PUCCH and PUSCH signals and the generated uplink reference signal for each transmit antenna port. That is, the multiplexing unit 2034 allocates the PUCCH and PUSCH signals and the generated uplink reference signal to the resource elements for each transmit antenna port.

The wireless transmission unit 2035 performs inverse fast Fourier transform (IFFT) on the multiplexed signal, performs a SC-FDMA modulation scheme to generate a SC-FDMA symbol, adds the CP to the generated SC-FDMA symbol, and generates a baseband digital signal. The wireless transmission unit converts the baseband digital signal into an analog signal, removes an extra frequency component from the signal, and converts a frequency of the signal into a carrier frequency through up-converting. The wireless transmission unit amplifies a power of the signal, and outputs and transmits the amplified signal to the transmit and received antenna 205.

The terminal apparatus 200-3 having no advanced reception function has the MMSE detection function instead of the linear detection, the maximum likelihood estimation or the interference canceller of the signal detection unit 2043.

As described above, the terminal apparatus having the advanced reception function can report the reception quality information without greatly increasing the feedback amount of the reception quality information report unlike the terminal apparatus having no advanced reception function. Accordingly, it is possible to remove or suppress the interference while suppressing the increase of the feedback amount.

### (Second Embodiment)

In the present embodiment, an example in a case where the subband CSI (for example, subband CSI) is configured will be described as the channel state information report of the downlink. A communication system according to the present embodiment includes the radio resource structure, the base station apparatus, and the terminal apparatus which are described in Figs. 1 to 4, 9 and 10. The communication system according to the present embodiment may adopt the channel state information report feedback of Figs. 5 to 8. Hereinafter, a different from the first embodiment will be mainly described.

The terminal apparatus of Fig. 7 according to the preset embodiment reports the capability (UE capability) of the terminal apparatus to the connected base station apparatus (S101). The terminal apparatus transmits the information indicating that the terminal apparatus has the advanced reception function to the base station apparatus by using the information of the capability. The base station apparatus transmits the reference signal (CRS) of the downlink. The resource assignment of the reference signal is shown in Fig. 3. The terminal apparatus estimates the channel state by using
the reference signal (not shown).

In Fig. 7, the base station apparatus transmits the channel state information reporting configuration to the terminal apparatus (S102). For example, the base station apparatus transmits the channel state information reporting configuration, as the RRC message. The base station apparatus transmits the mode configuration of the aperiodic channel state information report or/and the mode configuration of the periodic channel state information report to the terminal apparatus through the transmission of the channel state information reporting configuration. Hereinafter, the mode configuration of the aperiodic channel state information report will be described.

The base station apparatus transmits the mode configuration in which the wideband CSI report is fed back and the mode configuration in which the subband CSI report is fed back to the terminal apparatus through the transmission of the channel state information reporting configuration. The base station apparatus may transmit the mode configuration (mode configuration in which the CSI values for all the subbands are transmitted or the mode configuration in which the CSIs for the predetermined number of appropriate subbands are transmitted) in which the subband CSI report. Hereinafter, the mode configuration in which the subband CSI report is fed back will be described.

The subband CSI report is fed back is a configuration in which both the wideband CSI value and the subband CSI value are fed back as the channel state information report. The mode configuration in which the subband CSI report is fed back in the present embodiment may be a configuration in which the subband index of the selected subband CSI value is fed back. The CSI value of the subband CSI may be denoted by a different from the CSI value of the wideband CSI.

The base station apparatus transmit the channel state information request (CSI request) to the terminal apparatus (S103). For example, the channel state information request (CSI request) may be transmitted through the PDCCH. The PDCCH reports explicitly or implicitly the information related to the application of the advanced reception function. For example, the PDCCH may include a field for transmitting the information related to the application of the advanced reception function. For example, the terminal apparatus may report the information related to the application of the advanced reception function by a specific DCI format.

The terminal apparatus receives the channel state information request, and then feeds the channel state report back to the base station apparatus by a predetermined subframe (S104). For example, the terminal apparatus feeds the channel state report back according to the resource assignment of the PUSCH transmitted through the PDCCH. The terminal apparatus may feed the channel state information report back according to the resource assignment determined with a reception timing of the PDCCH as a reference point.

In Fig. 7, the terminal apparatus reports the channel state information to the base station apparatus whenever there is a request for the downlink channel state information from the base station apparatus (S105 and S106).

In the communication system according to the present embodiment, in a case where the information related to the application of the advanced reception function is a configuration in which an appropriate CSI value is fed back in a case where the downlink signal is received without applying the advanced reception function, the terminal apparatus reports both the CSI value of the wideband CSI and the CSI value of the subband CSI and an appropriate CSI value in a case where the downlink signal is received without applying the advanced reception function to the base station apparatus, as the channel state information report (S104).

In the communication system according to the present embodiment, in a case where the information related to the application of the advanced reception function is a configuration in which an appropriate CSI value is fed back in a case where the downlink signal is received by applying the advanced reception function, the terminal apparatus reports a CSI value of an appropriate subband CSI in a case where the downlink signal is received by applying the advanced reception function and a CSI value of an appropriate wideband CSI in a case where the downlink signal is received without applying the advanced reception function, as the channel state information report (S104).

For example, in a case where the information related to the application of the advanced reception function is a configuration in which an appropriate CSI value is fed back in a case where the downlink signal is received by applying the advanced reception function, in the configuration in which the subband CSI described in Fig. 5 is reported, the terminal apparatus feeds one CSI value (wideband CSI) for the system bandwidth and the CSI values (subband CSI) for the predetermined number of subbands selected from the subbands constituting the system band back to the base station apparatus. The CSI value of the wideband CSI is an appropriate CSI value in a case where the downlink signal is received without applying the advanced reception function. As the subband CSI, an appropriate CSI value is fed back in a case where the downlink signal is received by applying the advanced reception function.

Although it has been described that the wideband CSI is used as the appropriate CSI value in a case where the downlink signal is received without applying the advanced reception function and the subband CSI is used as the appropriate CSI value in a case where the downlink signal is received by applying the advanced reception function, another case may be applied. Among the wideband CSI and the predetermined number of CSIs, if at least one of the appropriate CSI in a case where the downlink signal is received without applying the advanced reception function and the appropriate CSI in a case where the downlink signal is received by applying the advanced reception function is included, this case is included in the present invention.

The terminal apparatus of Fig. 8 according to the present embodiment reports the capability (UE capability) of the terminal apparatus to the connected base station apparatus (S201). The base station apparatus transmits the reference signal (CRS) of the downlink. The terminal apparatus estimates the channel state by using the reference signal (not shown).

In Fig. 8, the base station apparatus transmits the channel state information reporting configuration to the terminal apparatus (S202). For example, the base station apparatus transmits the channel state information reporting configuration, as the RRC message. The base station apparatus transmits the mode configuration of the aperiodic channel state information report or/or the mode configuration of the periodic channel state information report to the terminal apparatus through the transmission of the channel state information reporting configuration. Hereinafter, the mode configuration of the periodical channel state information report will be described.

The base station apparatus transmits the mode configuration in which the wideband CSI report is fed back and the mode configuration in which the subband CSI report is fed back to the terminal apparatus through the transmission of the channel state information reporting configuration. The base station apparatus may transmit the mode configuration (the mode configuration in which the CSI values for all the subbands are transmitted or the CSIs for the predetermined number of subbands are transmitted) of the subband CSI report. Hereinafter, the mode configuration in which the subband CSI report is fed back will be described.

In a case where the transmission of the mode configuration of the periodical channel state information report is received, the terminal apparatus periodically transmits the channel state information report to the base station apparatus at a predetermined interval (S203 to 208). For example, the interval at which the channel state information is reported may be transmitted by the channel state information reporting configuration. The terminal apparatus may feed the channel state report back by using the resource of the PUCCH. The interval at which the channel state information is reported may be previously configured by the system.

In Fig. 8, the terminal apparatus reports the channel state information to the base station apparatus until the release of the mode configuration of the periodic channel state information report is received from the base station apparatus (S209).

The mode configuration in which the subband CSI report is fed back in the present embodiment is a configuration in which both the wideband CSI value and the subband CSI value are fed back, as the channel state information report. The mode configuration in which the subband CSI report is fed back in the present embodiment may be a configuration in which the subband index of the selected subband CSI value is fed back. The CSI value of the subband CSI may be denoted by a difference from the CSI value of the wideband CSI.

For example, in the configuration in which the subband CSI described in Fig. 6 is reported, the terminal apparatus feeds one CSI value (wideband CSI) for the system bandwidth back by the channel state information report S203. Subsequently, the terminal apparatus feeds the CSI value (subband CSI) of the selected appropriate subbands from the subbands (#0 and #1) constituting the bandwidth part #0 back by the channel state information report S204. The terminal apparatus may transmit the channel state information report S204 and the subband index of the selected subband.

Subsequently, the terminal apparatus feeds the CSI value (subband CSI) of the selected appropriate subband from the subbands (#2 and #3) constituting the bandwidth part #1 back by the channel state information report S205. Subsequently, the terminal apparatus feeds one CSI value (wideband CSI) for the system bandwidth back by the channel state information report S206. The terminal apparatus sequentially feeds back the CSI value of the subband CSI again by the above-described method (S207 and S208).

The terminal apparatus sequentially reports the wideband CSI and the subband CSI until the release of the mode configuration of the periodic channel state information report is received from the base station apparatus (S209). In the channel state information report feedbacks (S203 to 208), the feedback proportions of the wideband CSI and the subband CSI may be varied. The base station apparatus may transmit the feedback proportions to the terminal apparatus by the channel state information reporting configuration.

The feedback proportions of the wideband CSI and the subband CSI may be differently configured depending on whether or not the advanced reception function is applied. For example, in a case where the information related to the application of the advanced reception function is a configuration in which the appropriate CSI value is fed back in a case where the downlink signal is received by applying the advanced reception function, the feedback proportion of the subband CSI is increased.

In a case where the information related to the application of the advanced reception function is a configuration in which the appropriate CSI value is fed back in a case where the downlink signal is received without applying the advanced reception function, the terminal apparatus reports both the wideband CSI value and the subband CSI value and the appropriate CSI value in a case where the downlink signal is received without applying the advanced reception function to the base station apparatus, as the channel state information report (S104).

In the channel state information reports (S203 to 208), in a case where the information related to the application of the advanced reception function is a configuration in which the appropriate CSI value is fed back in a case where the downlink signal is received by applying the advanced reception function, the terminal apparatus reports the CSI value of the appropriate subband CSI in a case where the downlink signal is received by applying the advanced reception function in a case where the CSI value of the subband CSI is fed back. In the channel state information reports (S203 to 208), the terminal apparatus reports the CSI value of the appropriate CSI in a case where the downlink signal is received without applying the advanced reception function in a case where the CSI value of the wideband CSI is fed back.

Although it has been described that the wideband CSI is used as the appropriate CSI in a case where the downlink signal is received without applying the advanced reception function and the subband CSI is used as the appropriate CSI value in a case where the downlink signal is received by applying the advanced reception function, another case may be applied. Among the wideband CSI and the predetermined number of CSIs, if at least one of the appropriate CSI in a case where the downlink signal is received without applying the advanced reception function and the appropriate CSI in a case where the downlink signal is received by applying the advanced reception function is included, this case may be included in the present embodiment.

As described above, the terminal apparatus having the advanced reception function can report the reception quality information without greatly increasing the feedback amount of the reception quality information report unlike the terminal apparatus having no advanced reception function. Accordingly, it is possible to remove or suppress the interference while suppressing the increase of the feedback amount.

### (Third Embodiment)

In the present embodiment, another example in a case where the subband CSI (for example, subband CSI) is configured will be described as the channel state information report of the downlink. A communication system according to the present embodiment includes the radio resource structure, the base station apparatus and the terminal apparatus which are described in Figs. 1 to 4, 9 and 10. The communication system according to the present embodiment may adopt the channel state information report feedback of Figs. 5 to 8. Hereinafter, a different from the second embodiment will be mainly described.

The terminal apparatus of Fig. 7 according to the present embedment reports the capability (UE capability) of the terminal apparatus to the connected base station apparatus (S101). The terminal apparatus transmits the information indicating that the terminal apparatus has the advanced reception function to the base station apparatus by the information of the capability.

In Fig. 7, the base station apparatus transmit the channel state information reporting configuration to the terminal apparatus (S102). The base station apparatus transmits the mode configuration of the aperiodic channel state information report or/and the mode configuration of the periodic channel state information report to the terminal apparatus through the transmission of the channel state information reporting configuration. Hereinafter, the mode configuration of the aperiodic channel state information report will be described.

The base station apparatus transmits the mode configuration in which the wideband CSI report is fed back or the mode configuration in which the subband CSI report is fed back to the terminal apparatus through the transmission of the channel state information reporting configuration. Hereinafter, the mode configuration in which the subband CSI report is fed back will be described.

The base station apparatus transmits the channel state information request (CSI request) to the terminal apparatus (S103). For example, the channel state information request (CSI request) may be transmitted through the PDCCH. The PDCCH reports explicitly and implicitly reports the information related to the application of the advanced reception function.

The terminal apparatus receives the channel state information request, and then feeds the channel state report back to the base station apparatus by a predetermined subframe (S104).In Fig. 7, the terminal apparatus reports the channel state information to the base station apparatus whenever there is a request for the downlink channel state information from the base station apparatus (S105 and S106). The channel state report includes the CSI values of the subbands CSI for the plurality of subbands. The channel state information may include the CSI value of the wideband CSI in addition to the CSI value of the subband CSI.

In the communication system according to the present embodiment, in a case where the information related to the application of the advanced reception function is a configuration in which the appropriate CSI value is fed back in a case where the downlink signal is received without applying the advanced reception function, the terminal apparatus reports the appropriate CSI value in a case where the downlink signal is received without applying the advanced reception function to the base station apparatus for the CSI values of all the subband CSIs fed back in the channel state information report (S104).

In the communication system according to the present embodiment, in a case where the information related to the application of the advanced reception function is a configuration in which the appropriate CSI value is fed back in a case where the downlink signal is received by applying the advanced reception function, some CSI values of the CSI values of the subband CSIs fed back in the channel state information report (S104) is the CSI value of the appropriate subband CSI in a case where the downlink signal is received by applying the advanced reception function.

For example, in a case where the information related to the application of the advanced reception function is a configuration in which the appropriate CSI value is fed back in a case where the downlink signal is received by applying the advanced reception function, in the configuration in which the subband CSI described in Fig. 5 is reported, the terminal apparatus adds the appropriate CSI value in a case where the downlink signal is received by applying the advanced reception function to some of the CSI values (subband CSIs) for the predetermined number of subbands selected from the subbands constituting the system band, and feeds the CSI value back to the base station apparatus. For example, in Fig. 5, the terminal apparatus selects the subbands of the subbands #0, #2 and #4, feeds the appropriate CSI value in a case where the downlink signal is received without applying the advanced reception function back in the subbands #0 and #2, and feeds the appropriate CSI value in a case where the downlink signal is received by applying the advanced reception function back in the subband #4.

The subband index in which the appropriate CSI value is fed back in a case where the downlink signal is received by the applying the advanced reception function and the subband index in which the appropriate CSI value is fed back in a case where the downlink signal is received by applying the advanced reception function may be the same. In this case, the base station apparatus may determine a case where the advanced reception function is applied to the CSI value having higher quality among the CSI value of the same subband index and a case where the advanced reception function is not applied to the CSI value having lower quality.

The terminal apparatus feeds the channel state information report (S104) and any one of the subband index in which the appropriate CSI value is fed back in a case where the downlink signal is received by applying the advanced reception function and the subband index in which the appropriate CSI value is fed back in a case where the downlink signal is received without applying the advanced reception function. As the subband index, the subband index of which the number of subbands is smaller of the subband index in which the appropriate CSI value is fed back in a case where the downlink signal is received by applying the advanced reception function or the subband index in which the appropriate CSI value is fed back in a case where the downlink signal is received without applying the advanced reception function may be used.

The proportions of the appropriate CSI value in a case where the downlink signal is received by applying the advanced reception function and the appropriate CSI value in a case where the downlink signal is received without applying the advanced reception function may be varied. The base station apparatus may transmit the feedback proportions to the terminal apparatus by the channel state information reporting configuration S102. The base station apparatus may transmit one of a plurality of candidates having different feedback proportions to the terminal apparatus by the channel state information reporting configuration S102. The base station apparatus may configure the feedback proportions by the signals of the higher layer. As candidates of the feedback proportions, a case where all the advanced reception functions are not applied or a case where all the advanced reception functions are applied may be included.

The terminal apparatus of Fig. 8 according to the present embodiment reports the capability (UE capability) of the terminal apparatus to the connected base station apparatus (S201). In Fig. 8, the base station apparatus according to the present embodiment transmits the channel state information reporting configuration to the terminal apparatus (S202). For example, the base station apparatus transmits the channel state information reporting configuration, as the RRC message. The base station apparatus transmits the mode configuration of the aperiodic channel state information report or/and the mode configuration of the periodic channel state information report to the terminal apparatus through the transmission of the channel state information reporting configuration. Hereinafter, the mode configuration of the periodic channel state information report will be described.

The base station apparatus transmits the mode configuration in which the wideband CSI report is fed back and the mode configuration in which the subband CSI report is fed back to the terminal apparatus through the transmission of the channel state information reporting configuration. Hereinafter, the mode configuration in which the subband CSI report is fed back will be described.

In a case where the transmission of the mode configuration of the periodical channel state information report is received, the terminal apparatus periodically transmits the channel state information report to the base station apparatus at a predetermined interval (S203 to 208). The terminal apparatus may feed the channel state report back by using the resource of the PUCCH. In Fig. 8, the terminal apparatus reports the channel state information to the base station apparatus until the release of the mode configuration of the periodic channel state information report is received from the base station apparatus (S209).

For example, in the configuration in which the subband CSI described in Fig. 6 is reported, the terminal apparatus feeds one CSI value (wideband CSI) for the system bandwidth back by the channel state information report S203. Subsequently, the terminal apparatus feeds the CSI value (subband CSI) of the selected appropriate subbands from the subbands (#0 and #1) constituting the bandwidth part #0 back by the channel state information report S204. The terminal apparatus may transmit the channel state information report S204 and the subband index of the selected subband.

Subsequently, the terminal apparatus feeds the CSI value (subband CSI) of the selected appropriate subband from the subbands (#2 and #3) constituting the bandwidth part #1 back by the channel state information report S205. Subsequently, the terminal apparatus feeds one CSI value (wideband CSI) for the system bandwidth back by the channel state information report S206. The terminal apparatus sequentially feeds back the CSI value of the subband CSI again by the above-described method (S207 and S208).

The terminal apparatus sequentially reports the wideband CSI and the subband CSI (S203 to 208) until the release of the mode configuration of the periodic channel state information report is received from the base station apparatus (S209).

In the periodic channel state information report of the present embodiment, the appropriate CSI value is fed back in a case where the downlink signal is received by applying the advanced reception function in any one of the channel state information report S204 or the channel state information report S205. Similarly, the appropriate CSI value is similarly fed back also in another channel state information reports S207 and S208 of the CSI values of the subband CSIs.

As another reporting method, the appropriate CSI value is fed back in a case where the downlink signal is received without applying the advanced reception function in the channel state information reports S204 and S205. In another channel state information reports S207 and S208, the appropriate CSI value is fed back in a case where the downlink signal is received by applying the advanced reception function.

The base station apparatus may transmit the above-described reporting method in which the appropriate CSI value is fed back in a case where the downlink signal is received by applying the advanced reception function and the reporting timing to the terminal apparatus by the channel state information reporting configuration S202. The proportions of the appropriate CSI vale in a case where the downlink signal is received by applying the advanced reception function and the appropriate CSI value in a case where the downlink signal is received without applying the advanced reception function may be varied. The base station apparatus may transmit the feedback proportions to the terminal apparatus by the channel state information reporting configuration S202. The base station apparatus may transmit one of a plurality of candidates having different feedback proportions to the terminal apparatus by the channel state information reporting configuration S202. The base station apparatus may configure the feedback proportions by the signal of the higher layer. As candidates of the feedback proportions, a case where all the advanced reception functions are not applied or a case where all the advanced reception functions are applied may be included.

As described above, the terminal apparatus having the advanced reception function can report the reception quality information without greatly increasing the feedback amount of the reception quality information report unlike the terminal apparatus having no advanced reception function. Accordingly, it is possible to remove or suppress the interference while suppressing the increase of the feedback amount.

The programs operated in the base station apparatus and the mobile station apparatus according to the present invention may be programs (causing a computer to function) for controlling a CPU such that the functions of the above-described embodiments according to the present invention are realized. The information treated in these apparatuses is temporarily accumulated in a RAM at the time of the processing, and then is stored in various ROMs or HDD. When necessary, the information is read by the CPU, and is modified or rewritten. As the recording medium that stores the programs, any one of a semiconductor medium (for example, ROM or non-volatile memory card), an optical recording medium (for example, DVD, MO, MD, CD, or BD), and a magnetic recording medium (for example, magnetic tape or flexible disk) may be used. The loaded program is executed, and the functions of the above-described embodiments are realized. In addition, the functions of the present invention are realized in some cases by processing the loaded program in cooperation with an operating system or another application program based on the instruction of the program.

In a case where the programs are distributed on the market, the programs may be distributed by being stored in a portable recording medium, or may be transmitted to a server computer connected via a network such as the Internet. In this case, a storage apparatus of the server computer is also included in the present invention. A part or all of the mobile station apparatus and the base station apparatus according to the above-described embodiments may be typically realized as LSI which is an integrated circuit. The functional blocks of the reception apparatus may be individually realized as a chip, or a part or all of thereof may be realized as a chip by being integrated. In a case where the functional blocks are realized as the integrated circuit, an integrated circuit control unit that controls the functional blocks is added.

The method of realizing the apparatuses or functional blocks as the integrated circuit is not limited to the LSI, and a dedicated circuit or a general-purpose processor may be used. In a case where a technology of realizing the apparatuses or functional blocks as the integrated circuit has appeared instead of the LSI due to the advance of semiconductor technology, it is possible to use an integrated circuit produced using this technology.

The present invention is not limited to the above-described embodiments. The terminal apparatus of the present invention is not limited to the mobile station apparatus, and may be applied to terminal apparatuses of stationary or non-movable electronic apparatuses which are installed indoors or outdoors, such as AV apparatuses, kitchen apparatuses, cleaning and washing machines, air conditioners, office apparatuses, vending machines, and other home appliances.

The embodiments of the present invention have been described with reference to the drawings. However, the detailed structures are not limited to the above-described embodiments, and a change in the design without departing from the gist of the invention is included in the claims.

### Industrial Applicability

The present invention is appropriate by a terminal apparatus and a base station apparatus.

The present disclosure contains subject matter related to that disclosed in Japanese Priority Patent Application JP 2014-057386 filed in the Japan Patent Office on March 20, 2014, the entire contents of Japanese Priority Patent Application JP 2014-057386 are hereby incorporated by reference. Reference Signs List

- 100-1, 100-2: Base station apparatus
- 200-1, 200-2, 200-3: Terminal apparatus
- 101: Higher layer processing unit
- 102: Control unit
- 103: Transmission unit
- 104: Reception unit
- 105: Transmit and receive antenna
- 1011: Radio resource control unit
- 1012: Scheduling unit
- 1013: Transmission control unit
- 1031: Coding unit
- 1032: Modulation unit
- 1033: Downlink reference signal generation unit
- 1034: Multiplexing unit
- 1035: Wireless transmission unit
- 1041: Wireless reception unit
- 1042: Demultiplexing unit
- 1043: Demodulation unit
- 1044: Decoding unit
- 1045: Channel measurement unit
- 201: Higher layer processing unit
- 202: Control unit
- 203: Transmission unit
- 204: Reception unit
- 205: Transmit and receive antenna
- 2011: Radio resource control unit
- 2012: Scheduling information interpretation unit
- 2013: Reception control unit
- 2031: Coding unit
- 2032: Modulation unit
- 2033: Uplink reference signal generation unit
- 2034: Multiplexing unit
- 2035: Wireless transmission unit
- 2041: Wireless reception unit
- 2042: Demultiplexing unit
- 2043: Signal detection unit
- 2044: Channel measurement unit

## Claims

1. A terminal apparatus comprising:
a reception unit that receives information related to a network assisted interference cancellation and removal function, a channel state information request, and information related to a channel state information reporting configuration; and
a transmission unit that transmits a channel state information report feedback including a predetermined number of channel state information values in accordance with the information related to the channel state information reporting configuration and the channel state information request,
wherein, in a case where the information related to the network assisted interference cancellation and removal function indicates that the function is applied, a part of the predetermined number of channel state information values is an appropriate channel state information value in a case where a downlink signal is received by applying the network assisted interference cancellation and removal function.

2. The terminal apparatus according to claim 1,
wherein the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back, and
in a case where the information related to the network assisted interference cancellation and removal function indicates that the function is applied, any one of the first channel state information value and the second channel state information value is an appropriate channel state information value in a case where the downlink signal is received without applying the network assisted interference cancellation and removal function, and the other value is an appropriate channel state information value in a case where the downlink signal is received by applying the network assisted interference cancellation and removal function.

3. The terminal apparatus according to claim 1,
wherein the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back,
in a configuration in which the second channel state information value is fed back, the channel state information report feedback includes the first channel state information values and the second channel state information values, and
in a case where the information related to the network assisted interference cancellation and removal function indicates that the function is applied and the information related to the channel state information reporting configuration is a configuration in which the second channel state information value is fed back, any one of the first channel state information value and the second channel state information value is an appropriate channel state information value in a case where the downlink signal is received without applying the network assisted interference cancellation and removal function, and the other value is an appropriate channel state information value in a case where the downlink signal is received by applying the network assisted interference cancellation and removal function.

4. The terminal apparatus according to claim 1,
wherein the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back,
in a configuration in which the second channel state information value is fed back, the channel state information report feedback includes the first channel state information values and the second channel state information values, and
in a case where the information related to the network assisted interference cancellation and removal function indicates that the function is applied and the information related to the channel state information reporting configuration is a configuration in which the second channel state information value is fed back, a part of the second channel state information values is an appropriate channel state information value in a case where the downlink signal is received by applying the network assisted interference cancellation and removal function.

5. The terminal apparatus according to claim 1,
wherein the reception unit receives information related to a modulation scheme of an interference signal, and
includes a signal detection unit that removes or suppresses the interference signal by using the information related to the modulation scheme of the interference signal and the channel state information value.

6. The terminal apparatus according to claim 1,
wherein the reception unit receives information related to a layer of an interference signal, and
includes a signal detection unit that separates a spatial-multiplexed signal by using the information related to the layer of the interference signal and the channel state information value.

7. A base station apparatus comprising:
a transmission unit that transmits information related to a network assisted interference cancellation and removal function, a channel state information request, and information related to a channel state information reporting configuration; and
a reception unit that receives a channel state information report feedback including a predetermined number of channel state information values in accordance with the information related to the channel state information reporting configuration and the channel state information request,
wherein, in a case where the information related to the network assisted interference cancellation and removal function indicates that the function is applied, a part of the predetermined number of channel state information values is an appropriate channel state information value in a case where a downlink signal is received by applying the network assisted interference cancellation and removal function.

8. The base station apparatus according to claim 1,
wherein the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back, and
in a case where the information related to the network assisted interference cancellation and removal function indicates that the function is applied, any one of the first channel state information value and the second channel state information value is an appropriate channel state information value in a case where the downlink signal is received without applying the network assisted interference cancellation and removal function, and the other value is an appropriate channel state information value in a case where the downlink signal is received by applying the network assisted interference cancellation and removal function.

9. The base station apparatus according to claim 1,
wherein the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back,
in a configuration in which the second channel state information value is fed back, the channel state information report feedback includes the first channel state information values and the second channel state information values, and
in a case where the information related to the network assisted interference cancellation and removal function indicates that the function is applied and the information related to the channel state information reporting configuration is a configuration in which the second channel state information value is fed back, any one of the first channel state information value and the second channel state information value is an appropriate channel state information value in a case where the downlink signal is received without applying the network assisted interference cancellation and removal function, and the other value is an appropriate channel state information value in a case where the downlink signal is received by applying the network assisted interference cancellation and removal function.

10. The base station apparatus according to claim 1,
wherein the information related to the channel state information reporting configuration includes a configuration in which first channel state information values which are one type of channel state information values for a system bandwidth are fed back, and a configuration in which the system bandwidth is divided into predetermined units and second channel state information values which are one type of channel state information values for the divided units are fed back,
in a configuration in which the second channel state information value is fed back, the channel state information report feedback includes the first channel state information values and the second channel state information values, and
in a case where the information related to the network assisted interference cancellation and removal function indicates that the function is applied and the information related to the channel state information reporting configuration is a configuration in which the second channel state information value is fed back, a part of the second channel state information values is an appropriate channel state information value in a case where the downlink signal is received by applying the network assisted interference cancellation and removal function.
